# EUROPEAN PATENT SPECIFICATION

(11) **EP 1 797 153 B1**
(45) Date of publication and mention of the grant of the patent: **15.09.2010**
(21) Application number: 05762570.9
(22) Date of filing: 16.06.2005
(51) Int. Cl.: C09J 123/28, C08K 3/00, C09J 11/04

(54) **ADHESIVE COMPOSITION, METHOD FOR BONDING TO A METAL SURFACE AND RUBBER TO METAL ADHESIVE**
KLEBSTOFF, VERFAHREN ZUM KLEBEN AUF EINE METALLFLÄCHE SOWIE KLEBSTOFF FÜR GUMMI AUF METALL
COMPOSITION ADHESIVE, PROCEDE DE LIAISON A UNE SURFACE METALLIQUE ET ADHESIF CAOUTCHOUC-METAL

(30) Priority: 16.06.2004 US 580306 P
(43) Date of publication of application: 20.06.2007
(73) Proprietor: LORD CORPORATION, Cary, NC 27512-8012 (US)
(72) Inventor: GREEN, Christian, C., Waterford, PA 16441 (US); TALLMADGE, Jack, N., Fairview, PA 16451 (US)
(74) Representative: Lambert, Ian Robert
(86) International application number: PCT/US2005/021520
(87) International publication number: WO 2006/007438

(56) References cited:
- WO-A-98/49226
- WO-A-03/033613
- US-A- 4 119 587
- US-A1- 2004 033 374

## Description

### FIELD OF THE INVENTION

The invention relates to formulated adhesives applied to bond rubber to metal, in which bonding takes place under heat and pressure during the vulcanization process.

### BACKGROUND OF THE INVENTION

Bonding of vulcanizable rubber to rigid substrates, especially metal is conventionally obtained by two-coat approaches using a primer and covercoat or a one-coat, primerless system. In order to provide durable bonds under stress and environmental attack, adhesive compositions must exhibit a high degree of retention of rubber on the substrate after bond destruction. In order to achieve such performance, in the application of adhesive, careful control of dry film thickness must be maintained, and the adhesive must wet the substrate surface and provide adequate sweep resistance i.e., ability of the uncured, dry adhesive coating to completely cover the bonding area against the force of injected rubber in the mold cavity. RTM adhesives should also have good storage stability in the wet adhesive

In the literature relating to adhesives for bonding rubber to metal (RTM), the essential components include one or more halogenated film formers, crosslinkers, acid acceptors and other additives such as organosilanes, dispersing agents, adhesion promoting resins such as phenol formaldehyde, and fillers such as carbon black, silica, talc and calcium carbonate.

Adhesive compositions widely used commercially for bonding rubber to metal have been developed from the pioneering patents of Coleman et al, e.g., U.S. Pat. No. 3,258,388, and employ nitroso aromatic compounds. The conventional adhesives include compositions also typically contain thermosetting condensation polymers; polymers and copolymers of polar ethylenically unsaturated materials, halogenated rubbers, and/or polyisocyanates. The Coleman et al adhesive compositions provide good to excellent primary adhesion values with a wide variety of elastomers; however, such compositions do not by themselves provide desired levels of environmental resistance as measured by exposure to boiling water, salt spray or high humidity conditions. To obtain at least reasonable levels of environmental resistance, it has been necessary to employ primers such as phenolic-containing compositions; or incorporate additives such as silanes, silane-isocyanate adducts, phenolic materials, and the like, into the adhesive compositions.

Primerless one-coat adhesive compositions exhibiting excellent environmental resistance are described in U.S. Pat. No. 4,119,587. This patent describes an adhesive composition comprised of the three essential constituents: (a) halogenated polyolefinic, (b) aromatic nitroso compound, and (c) lead salts.

Conventional RTM adhesives are dispersions of finely ground active ingredients in particulate form, including crosslinkers, film formers, metal oxides, carbon black and the like typically, and must be diluted from the as-received total solids wt.% content (TSC) e.g., 40% down to 15 - 20% in order to provide adequate sprayability and at the same time control the dry film thickness of the adhesive coating on the metal substrate. Often even at reduced solids these dispersions spray poorly, as evidenced by spattering, and poor wet film coverage over the intended bonding area. It is critical to maintain the DFT in a preselected range of from about 0.3 to 2 mils in a one-coat or two-coat application, and within a variability ± 0.1 - 0.3 mils (±2.5 - 8 µm) for each coating on the metal surface. Without dilution the RTM adhesive dispersions often exhibit poor sprayability, and DFT control.

Another problem in the use of fine particulate dispersions as RTM adhesives relates to incidences of increasing viscosity after shelf aging. Over time, the viscosity of a conventional RTM adhesive can double or triple as measured by Brookfield viscometers. In order to reduce the adhesive at the time of use to a form which is sprayable, the adhesive must be diluted. This introduces variability to a process which must keep critical control of dry film thickness. Dilution using solvents introduces unwanted environmental hazards from the presence of VOC's. It would be commercially important to reduce the VOC content of RTM adhesives containing fine dispersions of active particulates while at the same time to improve the sprayability and hence DFT control.

Inert fillers are typically used in RTM adhesives. For some formulations of active ingredients exhibit poor sweep resistance, which is the ability of the dry adhesive film to resist being swept out of the bonding area by the molded elastomer. It is known that sweep resistance can be improved by the use of about 1-5 wt.% of fumed silica, characterized by a BET surface area, using nitrogen gas in the range of about 40 to about 600, and more usually in a range of about 50 to about 300 square meters per gram (m² /g). These additives however interfere with sprayability. Conventional RTM adhesives typically utilize inert fillers such as talc which has a surface area of from about 3 to about 14 m² /g, clay which has a surface area of from about 7 to about 21 m²/g and/or calcium carbonate which has a surface area of from about 5 to 10.5 m²/g.

None of the conventional inert fillers improves the problems of sprayability and viscosity stability in an RTM adhesive dispersion, and dilution is required, however the diluted adhesives still can exhibit poor spraying characteristics and difficulty in achieving control and uniformity of dry film thickness.

### SUMMARY OF THE INVENTION

According to the invention there is provided a rubber to metal adhesive according to appended claim 1, a method making a rubber to metal adhesive according to appended claim 22, and a method of bonding an elastomer to a metal surface according to appended claim 31.

The invention provides improved sprayable rubber to metal adhesives as a solids dispersion in a volatile liquid carrier, having a pigment grind of 0- 2 mils (Hegman® guage) and a sprayable viscosity when diluted to 25 ± 2 wt.% of from 50 to about 500 cP (Brookfield LVT 2 @ 30 rpm). The solids dispersion RTM adhesive comprises a nitroso compound, halogenated polyolefin, acid acceptor and from 5% to 35 wt.% of inert, incompressible, spheroidal particles having a BET surface area of from 0.1 to 10 m²/g and a 50^{th} percentile particle diameter (D₅₀) of 5 to 25 µm.

The invention includes a method of bonding an elastomer to a metal surface. The method includes providing a metal surface and providing a rubber to metal adhesive including a nitroso compound, a film-forming halogenated polyolefin, an acid acceptor and from 5% to 35 dry wt.% of spheroidal particles having a BET surface area of from 0.1 to 10 m² /g and a 50^{th} percentile particle diameter (D₅₀) of 5 to 25 µm, said rubber to metal adhesive having a viscosity of from 50 to 500 cP (Brookfield LVT 2 @ 30 rpm). The method includes spraying said provided rubber to metal adhesive onto said metal surface.

The invention includes a rubber to metal adhesive for bonding an elastomer to a metal. The rubber to metal adhesive includes a plurality of microspheres with the adhesive having a weight percent concentration of at least one percent of the microspheres. The rubber to metal adhesive preferably has a viscosity less than 500 cP (Brookfield LVT 2 @ 30 rpm).

The invention includes a method of making the elastomer to metal adhesive for bonding an elastomer to a metal. The method includes providing an elastomer to metal adhesive fluid composition, providing a plurality of microspheres, and adding the plurality of microspheres to the elastomer to metal adhesive fluid to provide an elastomer to metal adhesive having a viscosity less than or equal to 500 cP (Brookfield LVT 2 @ 30 rpm).

It is to be understood that both the foregoing general description and the following detailed description are exemplary of the invention, and are intended to provide an overview or framework for understanding the nature and character of the invention as it is claimed. The claims of the invention, together with the description, serve to explain the principals and operation of the invention.

### Detailed Description of Preferred Embodiments

Additional features and advantages of the invention will be set forth in the detailed description which follows, and in part will be readily apparent to those skilled in the art from that description or recognized by practicing the invention as described herein, including the detailed description which follows and the claims.

Reference will now be made in detail to the present preferred embodiments of the invention, examples of which are disclosed.

The essential components of the RTM adhesive dispersions according to the invention comprise a nitroso compound or precursor, one or more halogenated polymers, an acid acceptor, and a specified type and amount of inert, incompressible, spheroidal particles (ISP). The adhesive can be prepared in a concentration, however the general practice is to prepare a concentrate at a solids level of from 30 - 50 wt.%, and select a TSC range at the time of application taking into account the desired DFT. Best results are obtained at a TSC range of 25 ± 3 wt.% solids.

Optional, but preferably included ingredients for the RTM adhesive dispersions are zero to 10% carbon black; zero to 10% of non-spheroidal fillers as replacement for a corresponding amount of ISP; zero to 35%, preferably 5 -15 wt.% of a co-curative capable of forming covalent crossbonding/ crosslinking bonds with the adhesive and elastomer bonded thereto. Percentages indicated hereinbelow are on a dry weight basis (wt%).

It is essential in the practice of the invention to employ one or more halogen-containing film-forming polymers, including post-halogenated natural rubber and/or synthetic addition-polymerized, halogenated elastomer. The halogens employed in the halogenated elastomers will usually be chlorine or bromine, although fluorine can also be used. A combination of halogen atoms can also be employed in which case the halogen-containing polymer elastomer will have more than one halogen substituted thereon. Exemplary synthetic film formers are the halogen-containing polyolefinic elastomers. Their preparation is well known in the art and many types are available commercially. Representative halogen-containing polyolefinic elastomers include, but are not limited to chlorinated natural rubber, chlorinated polychloroprene, chlorinated polybutadiene, chlorinated butadiene-styrene copolymers, chlorinated ethylene propylene copolymers, chlorinated ethylene/propylene/non-conjugated diene terpolymers, chlorinated polyethylene, chlorosulfonated polyethylene, copolymers of α-chloroacrylonitrile and 2,3-dichloro-1,3-butadiene (DCD), brominated poly(2,3-dichloro-1,3-butadiene), copolymers of α-haloacrylonitriles and 2,3-dichloro-1,3-butadiene, chlorinated poly(vinyl chloride), vinyl chloride-vinylidene chloride-acrylate or acrylic acid terpolymers, and the like, including mixtures of such halogen-containing elastomers.

An exemplary mixture of film formers is chlorosulfonated polyethylene and chlorinated natural rubber. Thus, substantially any of the known halogen-containing derivatives of natural and synthetic elastomers are preferably employed in the practice of this invention, including mixtures of halogenated and non-halogenated elastomers. Chlorosulfonated polyethylene elastomers alone or in combination with chlorinated natural rubber are the most preferred mixed halogen-containing film formers. Chlorosulfonated polyethylene is commercially available from E. I. Du Pont de Nemours & Co. under the HYPALON ® mark.

Chlorinated polyolefin can be used as a primary film former, and should contain at least 40 wt. percent chlorine and a molecular weight greater than about 500. Such chlorine contents can be obtained by a process involving the dispersion and chlorination of high surface area polyolefinic particles in an aqueous medium taught in U.S. Patent No. 5,534,991.

Chlorinated natural rubber (CNR) is a preferred film former and several grades are commercially available from Bayer Aktiengesellschaft, under the PERGUT® mark.

Chlorosulfonated polyethylene (CSM) is a preferred film former and typically has a molecular weight in the range of about 30,000-150,000, preferably about 60,000-120,000. The chlorine content of suitable chlorosulfonated polyethylenes is in the range of about 20-50 wt. %, preferably about 25 to 45 wt.%. percent. The sulfur content is typically in the range of about 0.01 to 2, preferably about 1.0 to 1.5 percent.

The most preferred embodiments contain chlorinated natural rubber and chlorosulfonated polyethylene in a total amount ranging from about 30 to 40 dry wt.%, and preferably in 50:50 mixtures of 13-17 wt. % each on a dry weight basis of the adhesive.

A latex of the halogenated polyolefin of the present invention can be prepared according to methods known in the art such as by dissolving the halogenated polyolefin in a solvent and adding a surfactant to the resulting solution. Water can then be added to the solution under high shear to emulsify the polymer. The solvent is then stripped to obtain a latex having a total solids content of from about 10 to 60, preferably 25 to 50, percent by weight. The latex can also be prepared by emulsion polymerization of chlorinated ethylenically unsaturated monomers.

The utilization of chlorinated natural rubber either in solvent solution or as a latex is most preferred in forming the adhesive of the present invention inasmuch as generally other types of rubbers, halogenated and non-halogenated, and the like do not result in as good pre-bake properties. Accordingly, other types of rubbers are less preferred film formers. Aqueous dispersions of halogenated or preferably chlorinated natural rubbers are made by conventional techniques for producing aqueous dispersions. Examples of suitable processes and chlorinated natural rubbers which can be utilized are set forth in U.S. Patent Nos. 3,968,067; 4,070,825; 4,145,816; 4,243,566; and 6,103,786; the entire disclosure of each is hereby fully incorporated by reference. Generally, the various processes involve dissolving the elastomer in an organic solvent, followed by forming a water-based dispersion thereof with the aid of a surfactant. Any remaining solvent can be removed as by steam stripping. The chlorinated natural rubber generally contains from about 60% to about 75% and desirably from about 65% to about 68% by weight of chlorine therein based upon the total weight of the natural rubber. The chlorinated natural rubber latex generally contains from about 25 to about 75 and desirably from about 40 to about 60 weight percent of solids.

The incompressible spheroidal particulates contained in the RTM adhesives exhibit a compression strength of at least 200 p.s.i., a 50^{th} percentile particle size ranging from 5 to 25 µm, and a BET surface area of from 0.1 to 10 m²/g. The incompressible spheroidal particulates are inert to the reactive adhesive components, and are nonmetallic materials of a crystalline nature and selected from natural and synthetic calcined aluminum oxide, aluminosilicate, silicon dioxide, and ceramics materials. "Aluminum oxide" as used herein may include any aluminum oxide including Al₂O₃ products having up to 1% impurities not limited to native alumina, found as the mineral carborundum and refined by the Bayer process to remove impurities and produce a nominal 99.5% Al₂O₃ product. The aluminum oxide may be any of the commercially available alumina products.

The spheroidal ceramic spheres of which those naturally occurring or synthetically produced such that the compositions can include those containing about 50 to about 99% by weight silicon dioxide. Other components include up to about 30 % aluminum oxide, sodium oxide from 0 to up to about 11 %, potassium oxide up to about 6%, carbon up to about 3% and/or calcium oxide, ferric oxide, magnesium oxide, titanium oxide, sulfur trioxide in quantities from 0 to about 2%.

The ceramic spheres preferably will be silica and alumina or alkali aluminosilicate ceramic. Such products can be obtained commercially including 3M^{®} Zeeospheres^{®} ceramic microspheres. Hollow ceramic spheres must have compression or crush strength of at least 200 p.s.i. (1.38 MPa) and preferably have crush strength of 20,000 - 60,000 p.s.i. (138 - 414 MPa).

Other incompressible spheroidal particulates suitable herein are spheroidal silicon dioxide particles. These typically have a composition of from about 50 to about 99% by weight silicon dioxide and 0 to about 30 % aluminum oxide, as the key components, and contain sodium oxide from 0 to about 11 %, potassium oxide from 0 to about 6%, carbon from 0 to about 3% and/or calcium oxide, ferric oxide, magnesium oxide, titanium oxide, sulfur trioxide in quantities from 0 to about 2%. The silicon dioxide material may be any of the commercially available products meeting the requirements set forth herein. One preferred silicon dioxide material has a composition of about 99% silicon dioxide. This material occurs naturally in globular balls and is process treated with high purity heat and sold commercially as Goresil^{®}. The particle size of the silicon dioxide suitably employed herein is a 50^{th} percentile diameter of 5 to 35 microns and preferably about 5 to 20 microns.

The incompressible sheroidal spheres are effective in improving the processability of the adhesive, maintaining a higher solids sprayable adhesive while at the same time providing industrially acceptable bonding performance when utilized in an amount of from 5 to 35 wt.%, preferably from 20 to 25 wt.% on dry wt. of adhesive.

The adhesive according to the invention can be formulated using water as the liquid carrier, in which case the halogenated polymer must be provided as an aqueous dispersion or latice. Suitable latices include the emulsion polymer latexes. Baled elastomers can be rendered as aqueous dispersions when converted from solvent solutions. The preferred aqueous-based film-formers are halogenated diene latices. A combination of a halogenated diene-type latex and an aqueous dispersion of a halogenated polyolefin is preferred. The preferred butadiene latices are disclosed in the following U.S. Patents: 6,268,422, 6,132,870, 5,496,884, 5,281,638, 5,717,031, 5,300,555, and 5,200,459, all incorporated herein by reference. The halogenated polyolefin of the latex can essentially be any natural or synthetic halogenated polyolefin elastomer. The halogens employed in the halogenated polyolefinic elastomer are typically chlorine or bromine, although fluorine can also be used. Mixtures of halogens can also be employed in which case the halogen-containing polyolefinic elastomer will have more than one type of halogen substituted thereon. The amount of halogen does not appear critical and can range from as low as about 3 weight percent to more than 70 weight percent, depending on the nature of the base elastomer or polymer.

Representative halogenated polyolefins include chlorinated natural rubber, chlorine- and bromine-containing synthetic rubbers including polychloroprene, chlorinated polychloroprene, chlorinated polybutadiene, hexachloropentadiene, butadiene/halogenated cyclic conjugated diene adducts, chlorinated butadiene styrene copolymers, chlorinated ethylene propylene copolymers and ethylene/propylene/non-conjugated diene terpolymers, chlorinated polyethylene, chlorosulfonated polyethylene, brominated poly(2,3-dichloro-1,3-butadiene), copolymers of α-haloacrylonitriles and 2,3-dichloro-1,3-butadiene, chlorinated poly(vinyl chloride), and the like, including mixtures of two or more halogenated polyolefins. Thus substantially any of the known halogen-containing derivatives of natural and synthetic elastomers can be employed in the practice of this invention, including mixtures of such elastomers.

Particularly preferred halogenated polyolefins utilized herein are 40-60 : 60-40 wt. ratio blend of chlorosulfonated polyethylene to chlorinated rubber, as well as a 60-70 : 40-30 wt. ratio blend of chlorosulfonated polyethylene to chlorinated rubber.

Preferred for the aqueous RTM adhesives herein are brominated poly(2,3-dichloro-1,3-butadiene, and copolymers of α-haloacrylo-nitriles and 2,3-dichloro-1,3-butadiene as disclosed in U.S. Pat. No. 5,496,884, incorporated herein by reference.

An aqueous dispersion of halogenated polyolefin can be prepared according to methods known in the art such as by dissolving the halogenated polyolefin in a solvent and adding a surfactant to the resulting solution. Water is added to the solution under high shear mixing, or in a jacketed colloidal energy mill to invert the initial continuous phase from solvent to water resulting in a colloidally stable polymer dispersion. The solvent is stripped to obtain a latex having a total solids content of from about 10 to 50, preferably 25 to 45 wt. percent solids. Latices are also prepared by conventional emulsion polymerization of chlorinated ethylenically unsaturated monomers. Suitable aqueous dispersions of halogenated polyolefins such as chlorosulfonated polyethylene are available from Lord Corporation.

A supplemental polymeric film-forming component may be a latex, dispersion, emulsion of a non-halogenated polymeric material. Examples of such non-halogenated polymeric materials, which may be utilized in aqueous form, include epoxy resins, phenoxy resins, resorcinol resins, melamine resins, styrenebutadiene copolymer rubber, natural rubber, polyacrylates, polybutadienes and polyvinylacetates. It should be noted that in addition to acting as a supplemental film-former, an epoxy resin may also act as an acid acceptor and used in conjunction with or as a replacement for particulate acid acceptors, e.g. zinc oxide.

If employed, the supplemental polymeric film-forming component of the present invention is typically utilized in an amount ranging from about 0.1 to 15, preferably from about 5 to 20 percent by dry weight (excluding solvent and water) of the total adhesive composition.

An essential component of the adhesive compositions of the present invention is a nitroso compound or precursor such as quinone dioxime. The nitroso groups function by crosslinking. Included are nitroso compounds or precursors capable of being converted by oxidation to a nitroso compound at elevated temperatures, such as occurs on exposure to temperatures from about 140 to 200 °C. A suitable precursor is found in the class of quinone compounds. Examples of quinone compound derivatives useful as nitroso compound precursors in the present invention include quinone dioxime, dibenzoquinone dioxime, 1,2,4,5-tetrachlorobenzoquinone, 2-methyl-1,4-benzoquinone dioxime, 1,4-naphthoquinone dioxime, 1,2-naphthoquinone dioxime, and 2,6-naphthoquinone dioxime. The nitroso compound may be replaced by the corresponding oxime or the corresponding nitro compound with the appropriate oxidation/reduction agent. The nitroso compounds are preferred and are based on aromatic hydrocarbons, such as benzenes, naphthalenes, anthracenes, biphenyls, and the like, containing at least two nitroso groups attached directly to non-adjacent ring carbon atoms. More particularly, such nitroso compounds are described as aromatic compounds having from 1 to 3 aromatic nuclei, including fused aromatic nuclei, having from 2 to 6 nitroso groups attached directly to non-adjacent nuclear carbon atoms. The preferred nitroso compounds are the dinitroso aromatic compounds, especially the dinitrosobenzenes and dinitrosonaphthalenes, such as the meta- or para-dinitrosobenzenes and the meta- or para-dinitrosonaphthalenes. The nuclear hydrogen atoms of the aromatic nucleus can be replaced by alkyl, alkoxy, cycloalkyl, aryl, aralkyl, alkaryl, arylamine, arylnitroso, amino, halogen, and like groups. The presence of such substituents on the aromatic nuclei has little effect on the activity of the nitroso compounds in the present invention. As far as is presently known, there is no limitation as to the character of the substituent, and such substituents can be organic or inorganic in nature. Thus, where reference is made herein to nitroso compound, it will be understood to include both substituted and unsubstituted nitroso compounds, unless otherwise specified.

The preferred poly-C-nitroso materials are the di-nitroso aromatic compounds as (R)ₘ -Ar-(NO)₂ , where Ar is phenylene or napthalene, especially the m- or p-dinitrosobenzenes (DNB) and dinitrosonaphthalenes. R in (R)ₘ Ar-(NO)₂ is a monovalent organic radical selected from the group consisting of alkyl, cycloalkyl, aryl, aralkyl, alkaryl, arylamine and alkoxy radicals having from 1 to 20 carbon atoms, amino, or halogen, and is preferably an alkyl group having from 1 to 8 carbon atoms; and m is zero, 1, 2, 3, or 4. Preferably m is zero. DNB is incorporated into the adhesive composition by addition as a solvent dispersion. Exemplary nitroso compounds are m-dinitrosobenzene, p-dinitrosobenzene, m-dinitrosonaphthalene, p-dinitrosonaphthalene, 2,5-dinitroso-p-cymeme, 2-methyl-1,4-dinitrosobenzene, 2-methyl-5-chloro-1,4-dinitrosobenzene, 2-fluoro-1,4-dinitrosobenzene, 2-methoxy-1-3-dinitroso-benzene, 5-chloro-1,3-dinitrosobenzene, 2-benzyl-1,4-dinitrosobenzene, 2-cyclohexyl-1,4-dinitrosobenzene and combinations thereof. Particularly preferred nitroso compounds include p-dinitrosobenzene and m-dinitrosobenzene.

Nitroso compounds are utilized in an amount ranging from about 15 to 25 wt.%, and preferably from 17 to 23 wt% on dry weight of the total adhesive composition.

The optional co-curing agent contains at least two groups capable of forming covalent crossbonding and crosslinking between the other components of the RTM adhesive, bonded rubber, and/or primer, such as, by way of an addition polymerization or condensation polymerization. As employed herein, co-curing agents reactive by way of addition polymerization undergo a free-radical reaction, or they may undergo an anionic polymerization, a cationic polymerization, a ring-opening polymerization, or coordinative polymerization.

The preferred crossbonding/ crosslinking reactive moiety participates in an addition polymerization. Preferred addition polymerizable moieties include, for example, optionally substituted alkenyl, oxyalkenyl, alkynyl, cycloalkenyl, bicycloalkenyl, styryl, (meth)acrylate, itaconate, maleimide, vinyl ester, epoxy, cyanate ester, nitrile, diallyl amide, benzocyclobutene, aromatic propargyl ether, aromatic acetylene, oxazoline, and the like. More preferred addition polymerizable moieties include alkenyl, oxyalkenyl, (meth)acrylate, maleimide, or cycloalkenyl. The most preferred adhesive compositions of the present invention further comprise a maleimide co-curing compound. The maleimide compound crosslinker can essentially be any compound containing at least two maleimide groups, as in bis-maleimide groups, as well as poly-bis maleimides. The maleimide groups may be attached to one another or may be joined to and separated by an intervening divalent radical such as alkylene, cyclo-alkylene, epoxydimethylene, phenylene (all 3 isomers), 2,6-dimethylene-4-alkylphenol, or sulfonyl. An example of a maleimide compound wherein the maleimide groups are attached to a phenylene radical is m-phenylene bismaleimide and is available as HVA-2 from E.I. Du Pont de Nemours & Co.

The suitable poly(bismaleimides) are aromatic polymaleimides having from about 2 to 100 aromatic nuclei wherein no more than one maleimide group is directly attached to each adjacent aromatic ring are preferred. Particularly preferred polymaleimide compounds have the formula: 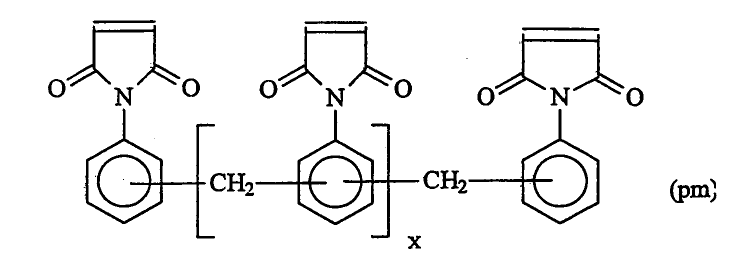 wherein x is from about 1 to 100. An exemplary commercial poly(bismaleimide) is sold as BMI-M-20 and BMI-S designation by Mitsui Toatsu Fine Chemicals, Incorporated.

The preferred co-curing agent maleimide compound is preferably utilized in the present invention in an amount ranging from about 5 to 15 wt.%, preferably from about 5 to 10 wt.% on dry weight of the total adhesive composition.

The adhesive compositions of the present invention may optionally contain a vulcanizing agent. The vulcanizing agent of the present invention can be any known vulcanizing agent which is capable of crosslinking elastomers at conventional temperatures. Preferred vulcanizing agents for use in the invention are selenium, sulphur, and tellurium, with selenium being most preferred. Optional vulcanizing agents can be employed in an amount ranging from about 1 to 15, preferably from about 2 to 7, percent by dry weight of the total adhesive composition.

An essential component of the adhesive compositions of the present invention is an acid acceptor. The acid acceptor is preferably a metal oxide, phosphate, phosphite, hydroxide and the like capable of scavenging free halogenous acids, e.g., oxides, phosphates, phosphites, and/or hydroxides. Example acid acceptors include oxides of zinc, cadmium, calcium, magnesium, lead, and zirconium; litharge; red lead; zirconium salts; and combinations thereof, and to a lesser extent calcium hydroxide, calcium carbonate and dibasic lead phosphite. Mixtures of more than one acid acceptor may be used in this invention, such as a preferred combination of dibasic lead phosphite (Dyphos) and zinc oxide. Specific examples of lead salts include dibasic lead phthalate, monohydrous tribasic lead maleate, tetrabasic lead fumarate, dibasic lead phosphite, and combinations thereof. Other examples of lead-containing compounds include basic lead carbonate, lead oxide and lead dioxide. Lead-containing acid acceptors are very effective, such as polybasic lead salts of phosphorous acid and saturated and unsaturated organic dicarboxylic acids and acid anhydrides, however lead-containing compounds are coming under increased concern for bioaccumulation. For environmental reasons, metal oxides are preferred over lead-containing compounds for purposes of the invention. A suitable replacement for lead-containing acid acceptors are metal phosphates, e.g., aluminum phosphate surface treated with a zinc compound, such as treatment with zinc hydroxide, and conversion to zinc oxide by filtering, washing with water, drying and heat-treating. The phosphates treated with Zn compounds can be used alone or in any mixtures with aluminum and/or zinc oxides. A more preferred acid scavenger is a mixture of from 25-35 wt.% zinc oxide, 25-35 wt.% zinc phosphate and 25-35 wt.% aluminum phosphate. A preferred lead substitute is a 1:1:1 mixture of zinc oxide, zinc phosphate and aluminum phosphate commercially available from Heubach Company as Heucophos®.

Acid acceptor is preferably utilized in an amount ranging from about 10 to 30 wt.%, preferably 10 to 15 wt.%, depending upon the selection of acceptor type and wt. % and halogen content of the halogenated polyolefin.

The solid components of the adhesive are contained in a volatile solvent or aqueous carrier. For solvent based embodiments, example suitable solvents are aromatic and halogenated aromatic hydrocarbons such as benzene, toluene, xylene, chlorobenzene, dichlorobenzene, and the like; halogenated aliphatic hydrocarbons such as trichloroethylene, perchloroethylene, propylene dichloride and the like; ketones such as methyl ethyl ketone, methyl isobutyl ketone, and the like; ethers, naphthas, etc., including mixtures of such carriers. The amount of the carrier employed is that which provides a composition suitable for use as an adhesive. A conventional amount will ordinarily be such as to provide a total solids content ranging from about 5 to 80, preferably about 15 to about 40 percent by weight.

The adhesive compositions of the present invention can optionally contain other well-known additives including plasticizers, pigment. Those embodiments utilizing organic solvents as the carrier are essentially absent surfactants. Other inert particulate fillers having a BET surface area greater than 10 m²/g, e.g. talc, clay and CaCO₃ can be employed in quantities not exceeding 10 wt.% as a substitute of the corresponding amount of incompressible sheroidal particles. Those embodiments containing water as the carrier typically contain a minor amount of dispersing agent, such as lignosulfonates, and/or wetting agents. In some instances it is preferable to include carbon or glass reinforcing filaments, and the like, in amounts employed by those skilled in the adhesive arts to obtain a desired color and consistency. Examples of optional ingredients include carbon black, silica such as fumed silica, and titanium dioxide.

The adhesive compositions of the present invention may be prepared by any method known in the art, but are preferably prepared by combining and milling or shaking the ingredients and solvent or water vehicle in a ball-mill, sand-mill, ceramic bead-mill, steel bead-mill, high speed media-mill, or the like. The adhesive +compositions may be applied to a surface to be bonded by spraying, dipping, brushing, wiping, roll-coating or the like, after which the adhesive composition is permitted to dry. The adhesive composition is typically applied in an amount sufficient to form a dry film thickness ranging from about 0.3 to 2.0 mils (8 to 50 µm), preferably from about 0.3 to 0.8 mils (8 to 20 µm). Adhesive dry film thickness above 2 mils (50 µm) total causes cohesive failure, while film thickness less than 0.1 mils (2.5 µm) can generate failure due to inadequate surface coverage. In the case of a two-coat adhesive composition, the adhesive is applied in a similar manner over the primer coat which has been permitted to completely dry.

The one-coat adhesive embodiments of the invention are especially adapted to be utilized to bond elastomers to metal surfaces without the use of a primer. The composition may be applied any substrate surface, e.g., to the metal surface, by spraying, dipping, brushing, wiping or the like, after which the wet adhesive coating is permitted to dry. The adhesive composition is typically applied to metal surfaces and the coated metal surface and elastomeric substrate are then brought together under heat and pressure for substantial contact and bonding completed in the rubber vulcanizing procedure. In some cases, it may be desirable to preheat (35 -80°C) the metal surface prior to application of the adhesive composition to assist in drying of the adhesive composition. The coated surface of the metal and the elastomeric substrate are typically brought together under a pressure of from about 20.7 to 172.4 Mega Pascals (MPa), preferably from about 20 MPa to 50 MPa. The resulting rubber-metal assembly is simultaneously heated to a temperature of from about 140° C to about 200° C., preferably from about 150°C to 170° C. The assembly should remain under the applied pressure and temperature for a period of from about 3 minutes to 60 minutes, depending on the vulcanizable elastomer cure rate and thickness of the elastomer substrate. This process may be carried out by applying the rubber substrate as a semi-molten material to the metal surface as in, for example, an injection-molding process. The process may also be carried out by utilizing compression molding, transfer molding or autoclave curing techniques. After the process is complete, the bonded adhesive and elastomer are fully vulcanized and ready for use in a final application, such as engine mount, damper, or belting, to name a few typical uses.

The adhesive compositions of the present invention may be prepared by any method known in the art, but are preferably prepared by combining and milling or shaking the ingredients and water in a ball-mill, sand-mill, ceramic bead-mill, steel bead-mill, high speed media-mill, or the like.

The adhesive compositions may be applied to a surface to be bonded by spraying, dipping, brushing; wiping, roll-coating or the like, after which the adhesive composition is permitted to dry. The one-coat adhesives are suitably applied in an amount sufficient to form a dry film thickness ranging from about 0.3 to 2.0 mils (8 to 50 µm), preferably from about 0.3 to 0.8 mils (8 to 20 µm). In the case of a two-coat adhesive composition as described more fully hereinafter, the adhesive is applied in a similar manner over the primer coat which has been permitted to completely dry.

The adhesive compositions of the present invention are capable of bonding any substrate or surface capable of receiving the adhesive composition. The adhesive is designed especially for bonding metal surfaces to a polymeric material, and especially elastomeric materials selected from natural rubber, olefinic synthetic rubber including polychloroprene, polybutadiene, neoprene, styrene-butadiene copolymer rubber, acrylonitrile-butadiene copolymer rubber, ethylene-propylene copolymer rubber, ethylene-propylene-diene terpolymer rubber, butyl rubber, brominated butyl rubber, alkylated chlorosulfonated polyethylene and the like. The material may also be a thermoplastic elastomer such as the thermoplastic elastomers sold under the tradenames SANTOPRENE and ALCRYN by Monsanto and DuPont, respectively. The material is most preferably an elastomeric material such as natural rubber (cis-polyisoprene). The surface to which the material is bonded can be any surface capable of receiving the adhesive such as a glass, plastic, or fabric surface, and is preferably a metal surface selected from any of the common structural metals such as iron, steel (including stainless steel), lead, aluminum, copper, brass, bronze, MONEL metal alloy (Huntington Alloy Products Div., International Nickel Co., Inc.), nickel, zinc, and the like. Prior to bonding, a metal surface is typically cleaned according to one or more methods known in the art such as degreasing, grit-blasting and zinc-phosphatizing.

The RTM adhesive disclosed herein can be utilized to bond rubber to metal as a one-coat adhesive, or as a two-coat combination of the adhesive as a cover coat applied over a primer. The primer is applied directly to the metal surface and can be a conventional water-based or solvent-based primer. Suitable water-based primers include phenolic resin-type primers such as CHEMLOK® 802, CHEMLOK® 805, CHEMLOK® 8006, 8007 and CHEMLOK® 8401 produced by Lord Corporation. Suitable solvent-based primers include phenolic resin-type primers such as CHEMLOK 205® or CHEMLOK 207® produced by Lord Corporation. The invention as covercoat is applied directly to the primer which has been applied to the metal so as to ensure contact between the adhesive composition and the elastomeric substrate which is brought into contact with the coated metal surface.

The adhesive compositions of the present invention are preferably prepared by combining and milling or shaking the solid ingredients and solvent or water carrier vehicle in a ball-mill; sand-mill, ceramic bead-mill, steel bead-mill, high speed media-mill, or the like. The adhesive compositions are applied to a surface to be bonded by spraying, dipping, and dip-spinning after which the adhesive composition is permitted to dry. The adhesive composition performs well when applied in an amount sufficient to form a dry film thickness ranging from about 0.3 to 2.0 mils (8 to 50 µm). Adhesive dry film thickness above 2 mils (50 µm) tends to cause a cohesive failure within the adhesive, while film thickness less than 0.3 mils (8 µm) can generate failure due to inadequate surface coverage. In the case of a two-coat adhesive composition, the adhesive is applied in a similar manner over the primer coat which has been permitted to completely dry.

Adhesive may be coated on metal parts as-received, or in some cases, it is desirable to preheat the metal parts to a temperature in a range of from 35 to about 80°C prior to application of the adhesive composition to assist in drying. The coated surface of the metal and the elastomeric substrate are typically brought together under a pressure of from about 20.7 to 172.4 Mega Pascals (MPa), preferably from about 20 MPa to 50 MPa. The resulting rubber-metal assembly is simultaneously heated to a temperature within a range of from about 135° C (275 °F) to about 171 C (375°F), and preferably from about 150°C to 170° C. The assembly should remain under the applied pressure and temperature for a period of from about 3 minutes to 60 minutes, depending on the vulcanizable elastomer cure rate and thickness of the elastomer substrate. This process may be carried out by applying the rubber substrate as a semi-molten material to the metal surface as in, for example, an injection-molding process. The bonding process may also be carried out by utilizing compression molding, transfer molding or autoclave curing techniques. After the process is complete, the bonded adhesive and elastomer are fully vulcanized and ready for use in a final application, such as engine mount, damper, or belting, to name a few typical uses.

The adhesives according to the invention are able to form rubber-tearing bonds even after soaking at elevated temperatures prior to contact with the vulcanizable elastomer. This is referred to as pre-bake resistance as a capability of tolerating a pre-bake cycle of up to about 12 minutes at 340°F (171°C) and still maintain the capability of providing a high percentage (80% - 100%) rubber tearing or retention on the metal surface after vulcanization of the rubber compound. That is, even though heated for up to 12 minutes at 340°F (171 °C) before contact with the rubber, after cure of the rubber, the adhesive does not fail but rather generally at least 80%, desirably at least 85% or 90% and preferably at least 95% or 100% of the bonded rubber tears during destructive testing.

### EXAMPLES

The following testing of examples are disclosed in order to further illustrate and fully disclose the invention and are not intended to limit in any manner the scope of the invention which is defined by the claims.

Primary Adhesion (PA) - bonded parts are pulled to destruction according to ASTM Test D429-Method B. Parts are tested in peel with a peel angle of 45 degrees. The test is conducted at room temperature with a specified test speed of, for example 2 or 20 inches per minute. After the bonded part fails, the peak peel strength value (measured in pounds per lineal inch) and the percent rubber retention on the adhesive coated area of the part are measured.

72-Hour Salt Spray (SS) - Bonded parts are buffed on the edges with a grinding wheel. The rubber is then tied back over the metal with stainless steel wire so as to stress the bonded area. This exposes the bond line to the environment. Failure is initiated by scoring the bond line with a razor blade. The parts are then strung on stainless steel wire and placed in a salt spray chamber. The environment inside the chamber is 100 of (38° C), 100 percent relative humidity, and 5 percent dissolved salt in the spray, which is dispersed throughout the chamber. The parts remain in this environment for 72 hours. Upon removal, the rubber is peeled from the metal with pliers. The percent rubber retention on the parts is then measured.

Hot Tear (HT) is performed after bonded parts have soaked for 15 min. at 300 °F (149°).

2-Hour Boiling Water (BW) Bonded parts are prepared the same way as they are for the salt spray test; however, in this test, the parts are placed in a beaker filled with boiling tap water. The parts remain in this environment for 2 hours. Upon removal, the rubber is peeled from the metal with pliers. The percent rubber retention on the parts is then measured.

7-Day Room Temperature Water-Immersion

Bonded parts are prepared the same way as they are for the salt spray test. In this test, the parts are placed in a beaker filled with tap water which is at room temperature. The parts remain in this environment for 7 days. Upon removal, the rubber is peeled from the metal with pliers. The percent rubber retention on the part is then measured.

The following examples are disclosed in order to further illustrate and fully disclose the invention and are not intended to limit in any manner the scope of the invention which is defined by the claims. Illustrated results of the above tests are set forth in tables below. In the data, reference is made to failure in the rubber body (R). Failure is expressed in terms of percent, and a high percent of failure in the rubber is desirable since this indicates that the adhesive bond is stronger than the rubber itself.

**Adhesive Example 1** (See Example 70-R, series 70 below)

| Component Description | Wt. % | Drv Weight | Wet Weight |
|---|---|---|---|
| Dinitrosobenzene (DNB) | 20.6 | 5.37 | 15.34 |
| Zinc oxide | 1.03 | 2.68 | 2.68 |
| m-phen bismaleimide | 1.03 | 2.68 | 2.68 |
| C NR | 15.5 | 4.04 | 4.04 |
| Carbon Black | 1 | 0.26 | 0.26 |
| CSM | 16.4 | 4.27 | 4.27 |
| Ceramic spheres | 25.7 | 6.70 | 6.70 |
| Xylene | | 0.00 | 64.03 |
| | | 26.00 | 100.0 |

**Adhesive Example 2** (See Example 70-Q in series 70 below)

| Component Description | Wt. % | Dry Weight | Wet Weight |
|---|---|---|---|
| Dinitrosobenzene | 20.0 | 5.20 | 14.86 |
| Zinc oxide | 10.0 | 2.60 | 2.60 |
| Bismaleimide** | 10.0 | 2.60 | 2.60 |
| Chlorinated natural rubber | 15.1 | 3.92 | 3.92 |
| Carbon Black** | 4.0 | 1.04 | 1.04 |
| Chlorosulfonated PE (CSM) | 15.9 | 4.14 | 4.14 |
| Ceramic spheres** Xylene | 25 | 6.50 0.00 | 6.50 64.34 |
| | | 26.0 | 100.0 |

Preparation procedure:
(1) ** these solids were pre-dried in an oven at 170°F (76 °C) for 48 hrs.
(2) Xylene was charged to a tank equipped with a Hockmeyer® mixer.
(3) CNR rubber, carbon black, maleimide, zinc oxide and ceramic spheres were added and mixed for 30 minutes. Speed was adjusted upwards if needed.
(4) a pre-agitated 35% solution of DNB in xylene was added with mixing for 15 minutes.
(5) Ingredients were pumped to a sandmill and recirculated back to the tank until a 0 to 2.0 mil (0 to 0.05 mm) grind is obtained using a Hegman® grind guage available from Precision Guage & Tool Co. Dayton, Ohio. Carbon black and CNR are preferably pre-ground using a Kady® mill for larger batches prior to processing through the sand mill.
(6) The pump and sandmill were cleaned with xylene, and added to the tank.
(7) CSM was added with mixing until dissolution.

The following series 12 examples according to the invention were prepared at the same TSC level as a commercial control, at 28%. Viscosity was measured after shelf aging at room temperature.

| **Masterbatch** | | **Masterbatch** | | | | | | |
|---|---|---|---|---|---|---|---|---|
| ***Raw Materials*** | %TSC | **Commercial control** | **12B** | **12C** | **12D** | **12E** | **12F** | **12G** |
| *DNB* | **35** | 24.50 | 21.85 | 19.65 | 17.50 | 15.31 | 15.15 | 13.46 |
| *Pb phosphite* | **100** | 27.12 | 0.00 | 0.00 | 0.00 | 0.00 | 0.00 | 0.00 |
| *ZnO* | **100** | 0.00 | 35.00 | 31.53 | 28.00 | 24.50 | 15.00 | 10.00 |
| *spheres* | **100** | 0.00 | 0.00 | 10.00 | 20.00 | 30.00 | 40.00 | 50.00 |
| *c*. *Black* | **100** | 6.73 | 5.96 | 5.36 | 4.77 | 4.19 | 4.12 | 3.65 |
| *Maleimide* | **100** | 10.62 | 9.50 | 8.54 | 7.60 | 6.65 | 6.58 | 5.85 |
| *Fumed silica* | **100** | 2.65 | 2.35 | 2.12 | 1.88 | 1.62 | 1.62 | 1.46 |
| *CNR* | **25** | 1.23 | 1.08 | 0.96 | 0.85 | 0.77 | 0.73 | 0.65 |
| *Xylene* | **0** | 0.00 | 0.00 | 0.00 | 0.00 | 0.00 | 0.00 | 0.00 |
| | **TSC %:** | **28.49%** | **28.11%** | **28.00%** | **28.00%** | **28.00%** | **28.00%** | **28.00%** |
| | *Dry Wt %* | *73* | *76* | *78* | *81* | *83* | *83* | *85* |

| | | **Adhesive** | | | | | | |
|---|---|---|---|---|---|---|---|---|
| ***Raw Materials*** | %TSC | **12A** | **12B** | **12C** | **12D** | **12E** | **12F** | **12G** |
| CSM | **20** | 20.31 | 18.15 | 16.34 | 14.52 | 1269 | 12.58 | 11.15 |
| *CNR* | **25** | 6.85 | 6.12 | 5.50 | 4.88 | 4.27 | 4.23 | 3.77 |
| *Xylene* | **0** | 0.00 | 0.00 | 0.00 | 0.00 | 0.00 | 0.00 | 0.00 |
| | **TSC %:** | **26.00%** | **26.00%** | **26.00%** | **26.00%** | **26.00%** | **26.00%** | **26.00%** |
| | *Dry Wt %* | 27 | *24* | *22* | *19* | *17* | *17* | *15* |
| Total | Dry Wt°% | **100** | **100** | **100** | **100** | **100** | **100** | **100** |

**Testing: Brookfield viscosity of shelf-aged samples**

| | | **12A** | **12B** | **12C** | **12D** | **12E** | **12F** | **12G** |
|---|---|---|---|---|---|---|---|---|
| *cPs* (2 @ 30rpm) | Initial | 318 | 249 | 160 | 124 | 75 | 64 | 55 |
| (mPa.s) | *+1 Week* | 353 | 223 | 132 | 95 | 58 | 54 | 48 |
| | *+2 wees* | 419 | 202 | 125 | 81 | 46 | 42 | 41 |
| | *+3 Weeks* | 472 | 191 | 120 | 81 | 44 | 44 | 39 |
| | *+4 Weeks* | 620 | 219 | 146 | 89 | 48 | 46 | 40 |
| | *+5 Weeks* | 750 | 210 | 130 | 85 | 53 | 48 | 44 |

**Series 12 Bonding performance** (% rubber retained )

| | | | | | | | | Avg % | | |
|---|---|---|---|---|---|---|---|---|---|---|
| *Test* | **FX, 0'** | **FX, 4'** | **BW, 0'** | **BW, 4'** | **SS, 0'** | **SS, 4'** | **PA,0'** | **PA, 4'** | **R** | **STD** |
| *CH 253X* | 100 | 100 | 83 | 88 | 92 | 92 | 100 | 100 | 94.4 | 6.6 |
| *PC16NL* | 100 | 100 | 30 | 38 | 90 | 98 | 100 | 100 | 82.0 | 29.9 |
| ***12A*** | 99 | 100 | 65 | 93 | 100 | 88 | 100 | 100 | 93.0 | 12.2 |
| ***12B*** | 100 | 100 | 67 | 93 | 100 | 92 | 100 | 100 | 94.0 | 11.4 |
| ***12C*** | 99 | 100 | 87 | 70 | 100 | 93 | 100 | 100 | 93.6 | 10.6 |
| ***12D*** | 100 | 100 | 97 | 70 | 93 | 92 | 100 | 100 | 94.0 | 10.2 |
| ***12E*** | 100 | 99 | 53 | 33 | 97 | 93 | 100 | 100 | 84.4 | 26.2 |
| ***12F*** | 100 | 97 | 48 | 40 | 93 | 82 | 100 | 100 | 82.5 | 24.6 |
| ***12G*** | 100 | 100 | 17 | 20 | 80 | 88 | 100 | 100 | 75.6 | 36.0 |

**Examples adhesive from series 51**

| **Adhesive Formulations** | | | | | | | | |
|---|---|---|---|---|---|---|---|---|
| | | **Masterbatch** | | | | | | |
| ***Raw Materials*** | % TSC | **51A** | **51B** | **51C** | **51D** | **51E** | **51F** | **51G** |
| *DNB* | **35** | 20.00 | 20.00 | 20.00 | 20.00 | 20.00 | 20.00 | 20.00 |
| *ZnO* | **100** | 10.00 | 10.00 | 10.00 | 10.00 | 10.00 | 10.00 | 10.00 |
| *spheres* | **100** | 30.00 | 30.00 | 30.00 | 30.00 | 25.00 | 25.00 | 25.00 |
| *Carbon black* | **100** | 4.62 | 4.00 | 4.00 | 4.00 | 4.00 | 4.00 | 4.00 |
| *Bismaleimide* | **100** | 10.00 | 7.50 | 7.50 | 7.50 | 10.00 | 10.00 | 10.00 |
| *Fumed Silica* | **100** | 1.85 | 0.00 | 0.00 | 0.00 | 0.00 | 0.00 | 0.00 |
| *CNR* | **25** | 0.92 | 1.00 | 1.00 | 1.00 | 1.00 | 1.00 | 1.00 |
| *Xylene* | **0** | 0.00 | 0.00 | 0.00 | 0.00 | 0.00 | 0.00 | 0.00 |
| | TSC %: | 30% | 30% | 30% | 30% | 30% | 30% | 30% |
| | *Dry Wt%* | *77* | *73* | *73* | *73* | *70* | *70* | *70* |

| | | **Adhesive** | | | | | | |
|---|---|---|---|---|---|---|---|---|
| ***Raw Materials*** | %TSC | **51A** | **51B** | **51C** | **51D** | **51E** | **51F** | **51G** |
| *CSM* | **20** | 15.92 | 15.92 | 20.81 | 18.37 | 15.92 | 23.31 | 19.62 |
| *CNR* | **25** | 6.69 | 11.58 | 6.69 | 9.13 | 14.08 | 6.69 | 10.38 |
| *Xylene* | **0** | 0.00 | 0.00 | 0.00 | 0.00 | 0.00 | 0.00 | 0.00 |
| | **TSC %:** | **26%** | **26%** | **26%** | **26%** | **26%** | **26%** | **26%** |
| | *Dry Wt %* | *23* | *28* | *28* | *28* | *30* | *30* | *30* |
| | **Total Dry Wt%** | **100.0** | **100.0** | **100.0** | **100.0** | **100.0** | **100.0** | **100.0** |

| **Testing Parameters** | | | | | | | | |
|---|---|---|---|---|---|---|---|---|
| **Application: Spray @ 150°F** | | | | **Elastomers/Cures** | | | | |
| | | | | Elastomer used: 40-45 A durometer sulfur cured NR cured at 320 °F (160 °C) for 16.5' | | | | |
| *Adhesives:* | | | | | | | | |
| *DFT @ 0.80 -1.0 mils -1 coat* (20.3 - 25.4 µm) | | | | *Rubber was compression Molded '* | | | | |
| *DFT @ 0.65 - 0.85 mils -* 2 *coat* (16.5 - 21.6 µm) | | | | Curing time is the time to a 90% cure + 10 min. (t90 +10') | | | | |
| Commercial controls Chemlok 253X and PC16NL | | | | **Testing** | | | | |
| *Primer DFT @ 0.25 - 0.35 mils* (6.4 - 8.9 µm) | | | | Primary Adhesion - 20"/min | | | | |
| Commercial primer Chemlok 205 | | | | Boiling Water - 2 hrs stressed | | | | |
| Salt Spray - 5 day stressed | | | | | | | | |
| ***Prebake:*** | | | | Hot Tear- after 15 min. soak @ 300°F (149°C) | | | | |
| 0 and 3 minute | | | | Zinc Phos. Steel (ZPS) Coupon - 3 ppt | | | | |
| | | | | | | | | |
| | **Physical Properties** | | | | | | | |
| | *(Units)* | **51A** | **51B** | **51C** | **51D** | **51E** | **51F** | **51G** |
| Viscosity | *cPs (mPa.s)* | 193 | 184 | 266 | 233 | 218 | 366 | 286 |
| Density | *lb*/*gal* * | 8.3 | 8.3 | 8.3 | 8.3 | 8.3 | 8.3 | 8.3 |
| Solids (3B) | *%-68°C* | 25.3 | 25.17 | 23.54 | 25.38 | 25.14 | 24.97 | 25.49 |
| Grind | *mils* ** | 0 | 0 | 0 | 0 | 0 | 0 | 0 |

| | | | | | | | | |
|---|---|---|---|---|---|---|---|---|
| * (kg/m3 : × 99.78) ** 1 mil = 25.4 µm) | | | | | | | | |

**Series 51 - Performance Summary Data:**

| **Elastomer: 40-45 A durometer sulfur cured NR** | | | | | | | | | | |
|---|---|---|---|---|---|---|---|---|---|---|
| **cured at 320°F -12 min (160°C)** | | | | | | | | | | |
| **1 Coat Testing (test type, prebake) % rubber retention** | | | | | | | | | | |
| *Test* | BW, 0' | BW, 3' | SS, 0' | SS, 3' | HT, 0' | HT, 3' | PA, 0' | PA, 3' | Avg %R | STD |
| ***System*** | | | | | | | | | | |
| *CH 253X* | 92 | 100 | 100 | 100 | 100 | 100 | 100 | 100 | **99.0** | 2.8 |
| *PC16NL* | 22 | 23 | 73 | 43 | 100 | 100 | 100 | 100 | **70.1** | 35.6 |
| 51A | 60 | 91 | 100 | 100 | 100 | 100 | 100 | 100 | **93.9** | 14.0 |
| *518* | 70 | 63 | 97 | 90 | 100 | 100 | 100 | 100 | **90.0** | 15.0 |
| *51C* | 67 | 66 | 100 | 95 | 100 | 100 | 100 | 100 | **91.0** | 15.2 |
| *51D* | 63 | 48 | 98 | 93 | 100 | 100 | 100 | 100 | **87.8** | 20.4 |
| *51E* | 90 | 83 | 95 | 100 | 100 | 100 | 100 | 100 | **96.0** | 6.4 |
| *51F* | 51 | 12 | 96 | 70 | 100 | 100 | 100 | 100 | **78.6** | 32.5 |
| *51G* | 74 | 22 | 99 | 72 | 100 | 100 | 100 | 100 | **83.4** | 27.6 |
| **2 Coat Testing** | | | | | | | | | | |
| ***Test*** | **BW, 0'** | **BW, 3'** | **SS, 0'** | **SS, 3'** | **HT, 0'** | **HT, 3'** | **PA, 0'** | **PA, 3'** | **Avg %R** | **STD** |
| ***System*** | | | | | | | | | | |
| ***205* / *CH 253X*** | 73 | 80 | 100 | 100 | 100 | 100 | 100 | 100 | **94.1** | 11.0 |
| ***205* / *PC16NL*** | 100 | 90 | 100 | 98 | 100 | 100 | 100 | 100 | **98.5** | 3.5 |
| ***205* / *51A*** | 84 | 75 | 98 | 97 | 100 | 100 | 100 | 100 | **94.3** | 9.5 |
| ***205* / *51B*** | 52 | 50 | 97 | 95 | 100 | 100 | 100 | 100 | **86.8** | 22.1 |
| ***205* / *51C*** | 100 | 82 | 98 | 95 | 100 | 100 | 100 | 100 | **96.9** | 6.3 |
| ***205* / *51D*** | 88 | 62 | 99 | 98 | 100 | 100 | 100 | 100 | **93.4** | 13.3 |
| ***205* / *51E*** | 95 | 80 | 98 | 98 | 100 | 100 | 100 | 100 | **96.4** | 6.8 |
| ***205* / *51F*** | 87 | 58 | 100 | 95 | 100 | 100 | 100 | 100 | **92.5** | 14.7 |
| ***205* / *51G*** | 88 | 67 | 98 | 98 | 100 | 100 | 100 | 100 | **93.9** | 11.6 |
| **Combined** | | | | | | | | | | |
| | | **Avg %R** | **STD** | | | | | | | |
| ***205* / *CH 253X*** | ***CH 253X*** | **96.6** | 8.2 | | | | | | | |
| ***205* / *PC16NL*** | ***PC16NL*** | **84.3** | 28.5 | | | | | | | |
| ***205* / *51A*** | ***51A*** | **94.1** | 11.6 | | | | | | | |
| ***205* / *51B*** | ***51B*** | **88.4** | 18.4 | | | | | | | |
| ***205* / *51C*** | ***51C*** | **93.9** | 11.6 | | | | | | | |
| ***205* / *51D*** | ***51D*** | **90.6** | 16.9 | | | | | | | |
| ***205* / *51E*** | ***51E*** | **96.2** | 6.4 | | | | | | | |
| ***205* /*51F*** | ***51F*** | **85.6** | 25.4 | | | | | | | |
| ***205* / *51G*** | ***51G*** | **88.6** | 21.2 | | | | | | | |

**Example adhesives from series 70**

| **Adhesive Formulations** | | | | | | | | | | | |
|---|---|---|---|---|---|---|---|---|---|---|---|
| | **Masterbatch** | | | | | | | | | | |
| ***Raw Materials*** | **% TSC** | **70A** | **70B** | **70C** | **70D** | **70E** | **70F** | **70G** | **70H** | **701** | **70J** |
| *DNB* | **35** | 21.85 | 23.00 | 21.85 | 23.00 | 21.85 | 23.00 | 20.00 | 20.75 | 20.00 | 20.75 |
| *ZnO* | **100** | 35.00 | 36.85 | 35.00 | 36.85 | 35.00 | 36.85 | 10.00 | 10.38 | 10.00 | 10.38 |
| *ZnAl Phos* | **100** | 0.00 | 0.00 | 0.00 | 0.00 | 0.00 | 0.00 | 0.00 | 0.00 | 0.00 | 0.00 |
| *spheres* | **100** | 0.00 | 0.00 | 0.00 | 0.00 | 0.00 | 0.00 | 30.00 | 31.12 | 30.00 | 31.12 |
| *Bismaleimide* | **100** | 9.50 | 10.00 | 0.00 | 0.00 | 9.50 | 10.00 | 10.00 | 10.38 | 0.00 | 0.00 |
| *Poly-bismaleimide* | **100** | 0.00 | 0.00 | 9.50 | 10.00 | 0.00 | 0.00 | 0.00 | 0.00 | 10.00 | 10.38 |
| *Carbon black* | **100** | 5.96 | 1.00 | 5.96 | 1.00 | 5.96 | 1.00 | 4.62 | 1.00 | 4.62 | 1.00 |
| *Fumed silica* | **100** | 2.35 | 2.46 | 2.35 | 2.46 | 2.35 | 2.46 | 1.85 | 1.92 | 1.85 | 1.92 |
| *CNR1* | **25** | 1.08 | 1.15 | 1.08 | 1.15 | 0.00 | 0.00 | 0.92 | 0.96 | 0.92 | 0.96 |
| *CNR2* | **30** | 0.00 | 0.00 | 0.00 | 0.00 | 1.08 | 1.15 | 0.00 | 0.00 | 0.00 | 0.00 |
| *Xylene* | **0** | 0.00 | 0.00 | 0.00 | 0.00 | 0.00 | 0.00 | 0.00 | 0.00 | 0.00 | 0.00 |
| | **TSC %:** | **30%** | **30%** | **30%** | **30%** | **30%** | **30%** | **30%** | **30%** | **30%** | **30%** |

| | | | | | | **Adhesive** | | | | | |
|---|---|---|---|---|---|---|---|---|---|---|---|
| ***Raw Materials*** | **% TSC** | **70A** | **70B** | **70C** | **70D** | **70E** | **70F** | **70G** | **70H** | **701** | **70J** |
| *CSM* | **20** | 18.15 | 19.12 | 18.15 | 19.12 | 18.15 | 19.12 | 15.92 | 16.52 | 15.92 | 16.52 |
| *CNR1* | **25** | 6.12 | 6.42 | 6.12 | 6.42 | 0.00 | 0.00 | 6.69 | 6.96 | 6.69 | 6.96 |
| *CNR2* | **30** | 0.00 | 0.00 | 0.00 | 0.00 | 6.12 | 6.42 | 0.00 | 0.00 | 0.00 | 0.00 |
| *Xylene* | **0** | 0.00 | 0.00 | 0.00 | 0.00 | 0.00 | 0.00 | 0.00 | 0.00 | 0.00 | 0.00 |
| | **TSC %:** | **26%** | **26%** | **26%** | **26%** | **26%** | **26%** | **26%** | **26%** | **26%** | **26%** |
| | **Total Dry Wt%** | **100** | **100** | **100** | **100** | **100** | **100** | **100** | **100** | **100** | **100** |

| | **Masterbatch** | | | | | | | | | | |
|---|---|---|---|---|---|---|---|---|---|---|---|
| ***Raw Materials*** | **% TSC** | **70K** | **70L** | **70M** | **70N** | **700** | **70P** | **70Q** | **70R** | **70S** | **70T** |
| *DNB* | **35** | 20.00 | 20.75 | 20.00 | 20.65 | 20.00 | 20.65 | 20.00 | 20.65 | 28.14 | 30.16 |
| *ZnO* | **100** | 10.00 | 10.38 | 10.00 | 10.31 | 10.00 | 10.31 | 10.00 | 10.31 | 0.00 | 0.00 |
| *ZnAl Phos* | **100** | 0.00 | 0.00 | 0.00 | 0.00 | 0.00 | 0.00 | 0.00 | 0.00 | 19.31 | 20.69 |
| *spheres* | **100** | 30.00 | 31.12 | 25.00 | 25.77 | 25.00 | 25.77 | 25.00 | 25.77 | 0.00 | 0.00 |
| *Bismaleimide* | **100** | 10.00 | 10.38 | 10.00 | 10.31 | 0.00 | 0.00 | 10.00 | 10.31 | 11.00 | 11.81 |
| *Poly-bismaleimide* | **100** | 0.00 | 0.00 | 0.00 | 0.00 | 10.00 | 10.31 | 0.00 | 0.00 | 0.00 | 0.00 |
| *Carbon black 1* | **100** | 4.62 | 1.00 | 4.00 | 1.00 | 4.00 | 1.00 | 4.00 | 1.00 | 0.00 | 0.00 |
| *Carbon black 2* | **100** | 0.00 | 0.00 | 0.00 | 0.00 | 0.00 | 0.00 | 0.00 | 0.00 | 7.58 | 1.00 |
| *Fumed silica* | **100** | 1.85 | 1.92 | 0.00 | 0.00 | 0.00 | 0.00 | 0.00 | 0.00 | 0.00 | 0.00 |
| *CNR1* | **25** | 0.00 | 0.00 | 1.00 | 1.04 | 1.00 | 1.04 | 0.00 | 0.00 | 0.00 | 0.00 |
| *CNR2* | **30** | 0.92 | 0.96 | 0.00 | 0.00 | 0.00 | 0.00 | 1.00 | 1.04 | 1.00 | 1.07 |
| *Xylene* | **0** | 0.00 | 0.00 | 0.00 | 0.00 | 0.00 | 0.00 | 0.00 | 0.00 | 0.00 | 0.00 |
| | **TSC %:** | **30%** | **30%** | **30%** | **30%** | **30%** | **30%** | **30%** | **30%** | **30%** | **30%** |

| | **Adhesive** | | | | | | | | | | |
|---|---|---|---|---|---|---|---|---|---|---|---|
| ***Raw Materials*** | **% TSC** | **70K** | **70L** | **70M** | **70N** | **70O** | **70P** | **70Q** | **70R** | **70S** | **70T** |
| CSM | **20** | 15.92 | 16.52 | 15.92 | 16.42 | 15.92 | 16.42 | 15.92 | 16.42 | 22.97 | 24.58 |
| *CNR1* | **25** | 0.00 | 0.00 | 14.08 | 14.50 | 14.08 | 14.50 | 0.00 | 0.00 | 0.00 | 0.00 |
| *CNR2* | **30** | 6.69 | 6.96 | 0.00 | 0.00 | 0.00 | 0.00 | 14.08 | 14.50 | 10.00 | 10.69 |
| *Xylene* | **0** | 0.00 | 0.00 | 0.00 | 0.00 | 0.00 | 0.00 | 0.00 | 0.00 | 0.00 | 0.00 |
| | **TSC %:** | **26%** | **26%** | **26%** | **26%** | **26%** | **26%** | **26%** | **26%** | **26%** | **26%** |
| | **Total Dry Wt%** | **100** | **100** | **100** | **100** | **100** | **100** | **100** | **100** | **100** | **100** |

### Testing Parameters

| **Application: Spray @ 150°F** | **Elastomers/Cures** |
|---|---|
| | 40-45 A durometer sulfur cured NR |
| ***Adhesives:*** | cured @ 320 of (160 °C) for 16' |
| *DFT @ 0.65 - 0.85 mils - 2 coat* (16.5 - 21.6 µm) | *Compression Molded (t90* + 10') |
| Commercial Control CH 253X | |
| Commercial control PC-16NL | Primary Adhesion - 20"/min |
| | Boiling Water - 2 hrs stressed |
| | Salt Spray - 5 day stressed |
| ***Primer*** | |
| *DFT @ 0.25 - 0.35 mils* (6.4 - 8.9 µm) | |
| *Commercial primer Chemlok 205* | |

| ***Prebake:*** | Substrate |
|---|---|
| 0 and 4 minute | ZPS Coupon - 3 ppt |

**Example series 70 - Performance Summary Data:**

| | **2 Coat Testing** | | | | | | | |
|---|---|---|---|---|---|---|---|---|
| ***Test*** | **BW, 0'** | **BW, 4'** | **SS, 0'** | **SS, 4'** | **PA, 0'** | **PA, 4'** | **Avg %R** | **STD** |
| ***System*** | | | | | | | | |
| ***205*/*CH 253X*** | 100 | 100 | 100 | 97 | 100 | 100 | **99.5** | 1.2 |
| ***205*/*PC16NL*** | 100 | 100 | 97 | 97 | 100 | 100 | **99.0** | 1.5 |
| ***205*/*70A*** | 100 | 100 | 97 | 100 | 100 | 100 | **99.5** | 1.2 |
| ***205*/*70B*** | 100 | 100 | 97 | 100 | 100 | 100 | **99.5** | 1.2 |
| ***205*/*70C*** | 100 | 100 | 100 | 100 | 100 | 100 | **100.0** | 0.0 |
| ***205*/*70D*** | 100 | 100 | 97 | 100 | 100 | 100 | **99.5** | 1.2 |
| ***205*/*70E*** | 100 | 100 | 97 | 100 | 100 | 100 | **99.5** | 1.2 |
| ***205*/*70F*** | 100 | 100 | 100 | 100 | 100 | 100 | **100.0** | 0.0 |
| ***205*/*70G*** | 100 | 100 | 95 | 95 | 100 | 100 | **98.3** | 2.6 |
| ***205*/*70H*** | 30 | 30 | 96 | 90 | 100 | 100 | **74.3** | 34.5 |
| ***205*/*70I*** | 100 | 100 | 100 | 100 | 100 | 100 | **100.0** | 0.0 |
| ***205*/*70J*** | 100 | 100 | 100 | 100 | 100 | 100 | **100.0** | 0.0 |
| ***205*/*70K*** | 100 | 100 | 95 | 92 | 100 | 100 | **97.8** | 3.5 |
| ***205*/*70L*** | 100 | 100 | 100 | 100 | 100 | 100 | **100.0** | 0.0 |
| ***205*/*70M*** | 100 | 100 | 98 | 98 | 100 | 100 | **99.3** | 1.0 |
| ***205*/*70N*** | 100 | 100 | 97 | 93 | 100 | 100 | **98.3** | 2.9 |
| ***205*/*70O*** | 100 | 100 | 100 | 100 | 100 | 100 | **100.0** | 0.0 |
| ***205*/*70P*** | 100 | 100 | 96 | 95 | 100 | 100 | **98.5** | 2.3 |
| ***205*/*70Q*** | 100 | 100 | 96 | 97 | 100 | 100 | **98.8** | 1.8 |
| ***205*/*70R*** | 100 | 100 | 90 | 97 | 100 | 100 | **97.8** | 4.0 |
| ***205*/*70S*** | 100 | 100 | 100 | 93 | 100 | 100 | **98.8** | 2.9 |
| ***205*/*70T*** | 100 | 100 | 98 | 100 | 100 | 100 | **99.7** | 0.8 |

**Aqueous Carrier Embodiments.**
The following series 45, 85, and 69 represent RTM adhesives according to the present invention in which water is used as a carrier and the solids are dispersed using wetting aid and dispersant. Bonded rubber-to-metal assemblies were prepared using standard procedures. Some coated coupons are exposed to prebake / precure heat conditions. When prebaked for a specified time, the adhesive coated parts are exposed to the molding temperature for that specified time in minutes before the rubber is injected into the cavity. This simulates actual production conditions and helps determine if the adhesive remains active enough to successfully bond the rubber compound.
Adhesives were tested using multiple trials for primary adhesion, hot tear, boiling water, and salt spray resistance , with and without prebake.
Elastomer tested: 40-45 A durometer sulfur cured NR cured at 320°F (160° C)for 16 min.
Hot Tear was measured after 15 min @ 300 of (149 °C)
Adhesive DFT was 0.65 - 0.80 mils (16-20 µm)
Bonding was done by compression Molding semi EV natural rubber compound (HC-106) (t90 + 10'), or
Boiling Water test- parts were stressed for 2 hours.
For Salt Spray - 7 day stressed
Primary Adhesion was measured using a peel rate of 20"/min (50 cm/min)
Commercial primer used for each examples in series 45 A-J was Chemlok® 8121 The dry film thickness of the primer was 0.25 - 0.35 mils (6 - 9 µm)
Commercial covercoat control was Chemlok® 8007
Prebake was 0 and 4 min.
The substrate was zinc phosphatized steel 3 ppt
Failure modes were noted as follows: SB = stock break, R = Rubber cohesive; RC = Rubber-to-cement; CM = cement-to-metal, and CP = Cement to primer failure.

### Series 45 aqueous adhesive examples

| | | **Masterbatch** | | | | | | | | | |
|---|---|---|---|---|---|---|---|---|---|---|---|
| ***Raw Materials*** | **% TSC** | **45A** | **45B** | **45C** | **45D** | **45E** | **45F** | **45G** | **45H** | **451** | **46J** |
| *DNB* Wetcake | **84.6** | 30.13 | 19.60 | 22.62 | 21.13 | 18.49 | 18.49 | 18.49 | 18.49 | 18.49 | 18.49 |
| *C. Black 1* | **100** | 15.97 | 10.36 | 11.95 | 11.15 | 9.78 | 9.78 | 9.78 | 9.78 | 9.78 | 9.78 |
| *Wetting agent* | **33** | 0.48 | 0.32 | 0.38 | 0.35 | 0.29 | 0.29 | 0.29 | 0.29 | 0.29 | 0.29 |
| *Lignosulfate* | **100** | 0.48 | 0.32 | 0.38 | 0.35 | 0.29 | 0.29 | 0.29 | 0.29 | 0.29 | 0.29 |
| *ZnO* | **100** | 0.00 | 20.00 | 10.00 | 15.00 | 20.00 | 20.00 | 20.00 | 20.00 | 20.00 | 20.00 |
| *spheres* | **100** | 0.00 | 15.00 | 15.00 | 15.00 | 15.00 | 15.00 | 15.00 | 15.00 | 15.00 | 15.00 |
| *DI Water.* | **0** | 0.00 | 0.00 | 0.00 | 0.00 | 0.00 | 0.00 | 0.00 | 0.00 | 0.00 | 0.00 |
| | TSC %: | 29.51% | 51.16% | 53.02% | 62.03% | 48.54% | 47.28% | 46.08% | 48.64% | 47.28% | 46.08% |
| | *Dry Wt* | *47* | *66* | *60* | *63* | *64* | *64* | *64* | *64* | *64* | *64* |
| | | | | | | | | | | | |

| | | **Adhesive** | | | | | | | | | |
|---|---|---|---|---|---|---|---|---|---|---|---|
| ***Raw Materials*** | **% TSC** | **45A** | **46B** | **45C** | **45D** | **46E** | **45F** | **45G** | **45H** | **45I** | **45J** |
| *DCD Terpolymer* | **37** | 42.61 | 27.70 | 31.93 | 29.80 | 26.16 | 21.16 | 16.16 | 26.16 | 21.16 | 16.16 |
| *DCD Homopolymer* | **35** | 10.32 | 6.70 | 7.74 | 7.22 | 0.00 | 0.00 | 0.00 | 0.00 | 0.00 | 0.00 |
| *SBR Latex* | **50** | 0.00 | 0.00 | 0.00 | 0.00 | 10.00 | 15.00 | 20.00 | 0.00 | 0.00 | 0.00 |
| *HYP 605* Latex | **50** | 0.00 | 0.00 | 0.00 | 0.00 | 0.00 | 0.00 | 0.00 | 10.00 | 15.00 | 20.00 |
| *DI* Water | **0** | 0.00 | 0.00 | 0.00 | 0.00 | 0.00 | 0.00 | 0.00 | 0.00 | 0.00 | 0.00 |
| | TSC %: | 31.00% | 45.00% | 45.00% | 45.00% | 45.00% | 45.00% | 45.00% | 45.00% | 45.00% | 45.00% |
| | *Dry Wt %* | *53* | *34* | *40* | *37* | *36* | *36* | *36* | *36* | *36* | *36* |
| | | | | | | | | | | | |
| | **Total Dry Wt%** | | **100.0** | **100.0** | **100.0** | **100.0** | **100.0** | **100.0** | **100.0** | **100.0** | **100.0** |

### Series 45 performance testing (% of bond area and type of failure)

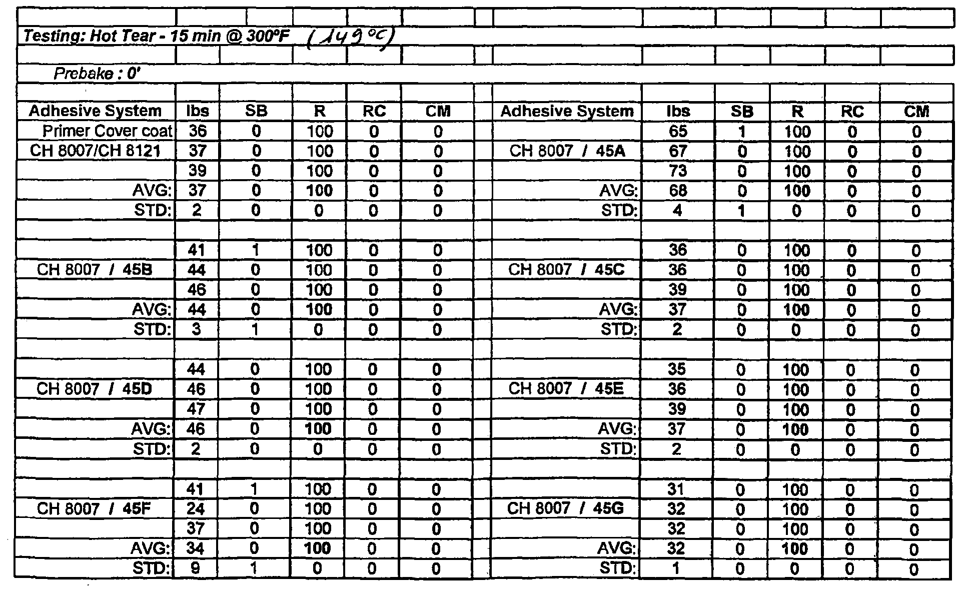

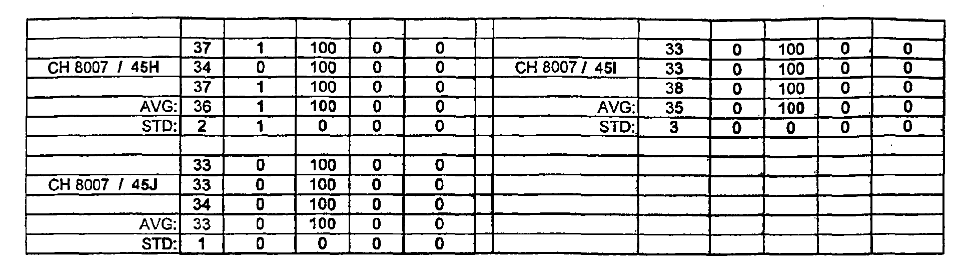

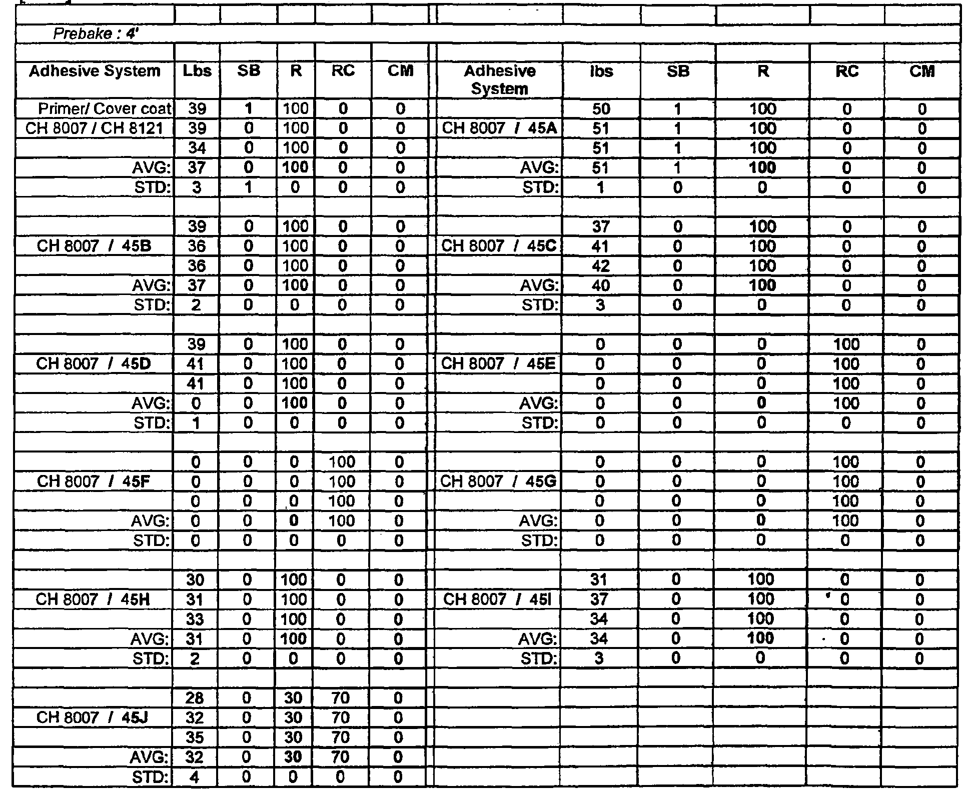

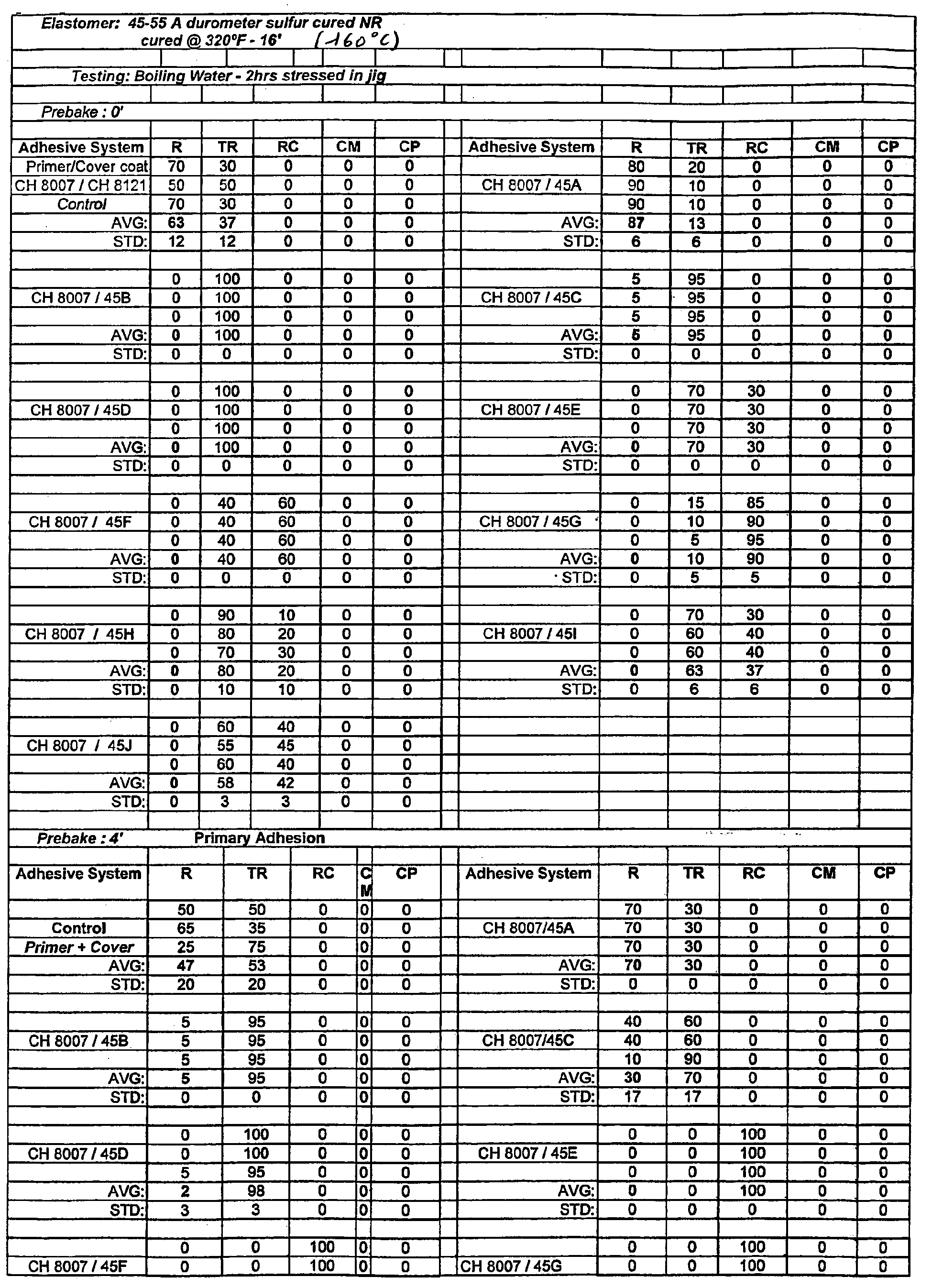

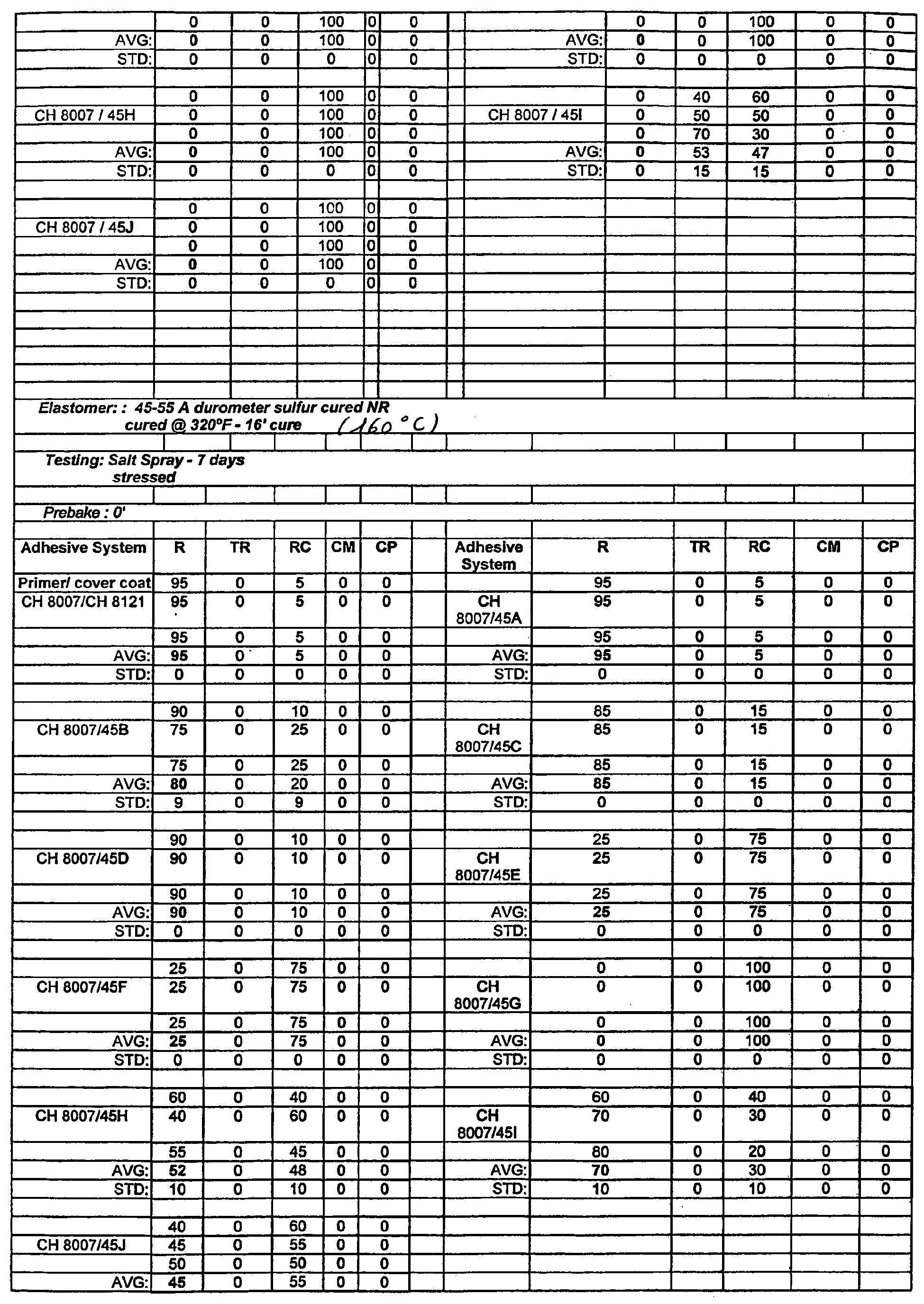

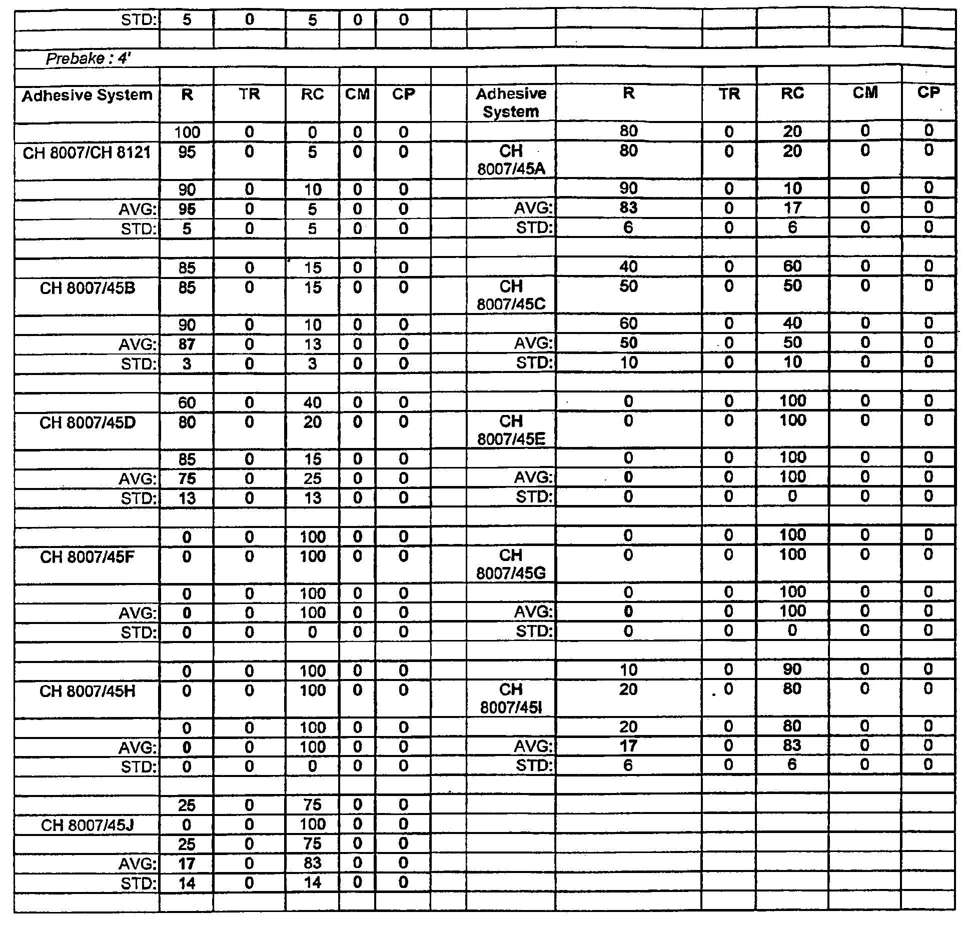

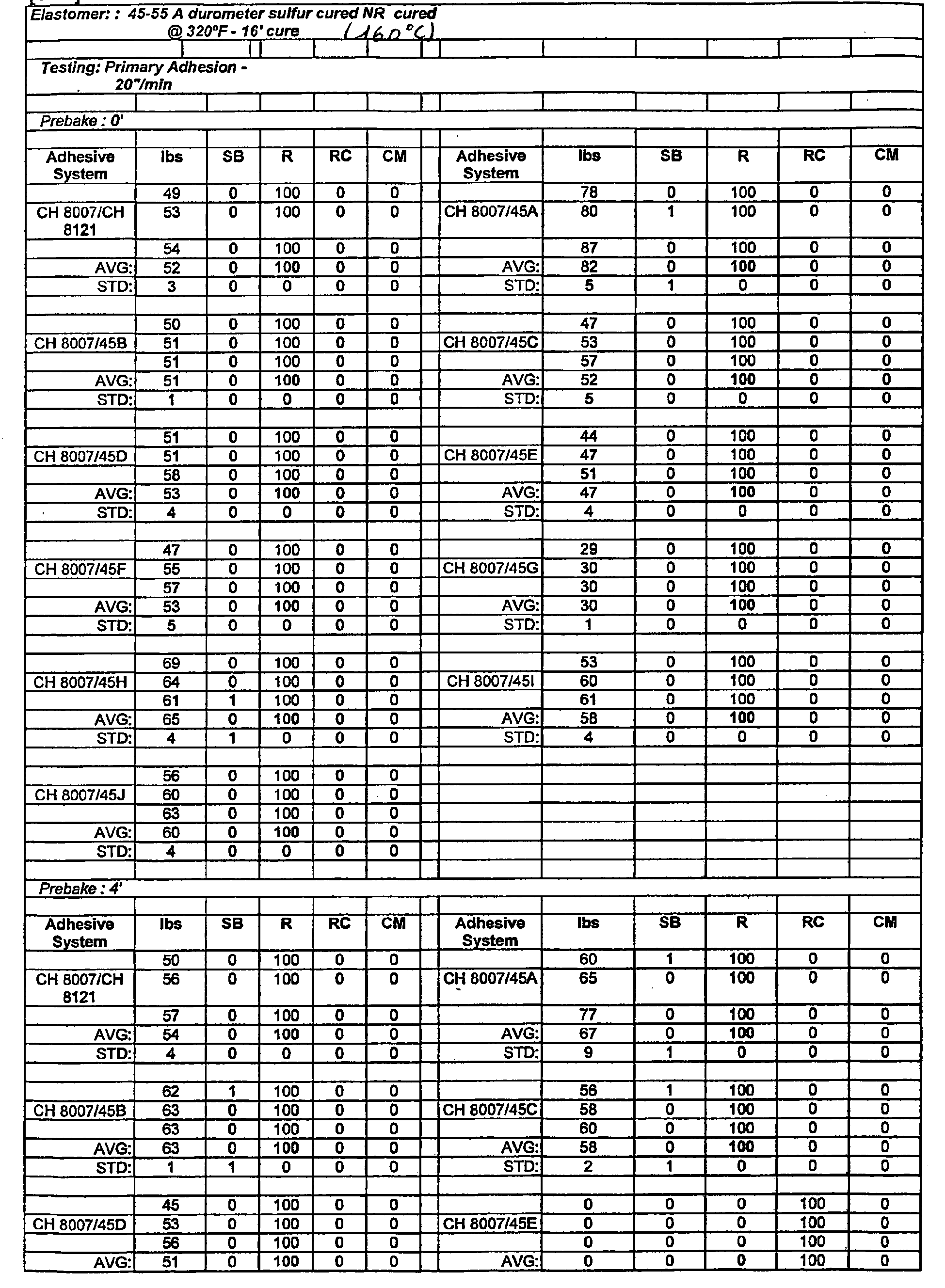

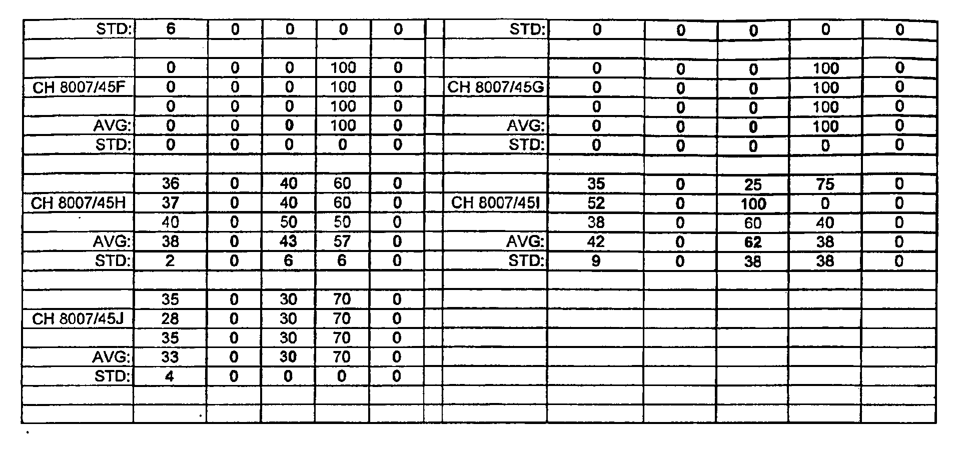

### Example Series 85 aqueous RTM adhesives

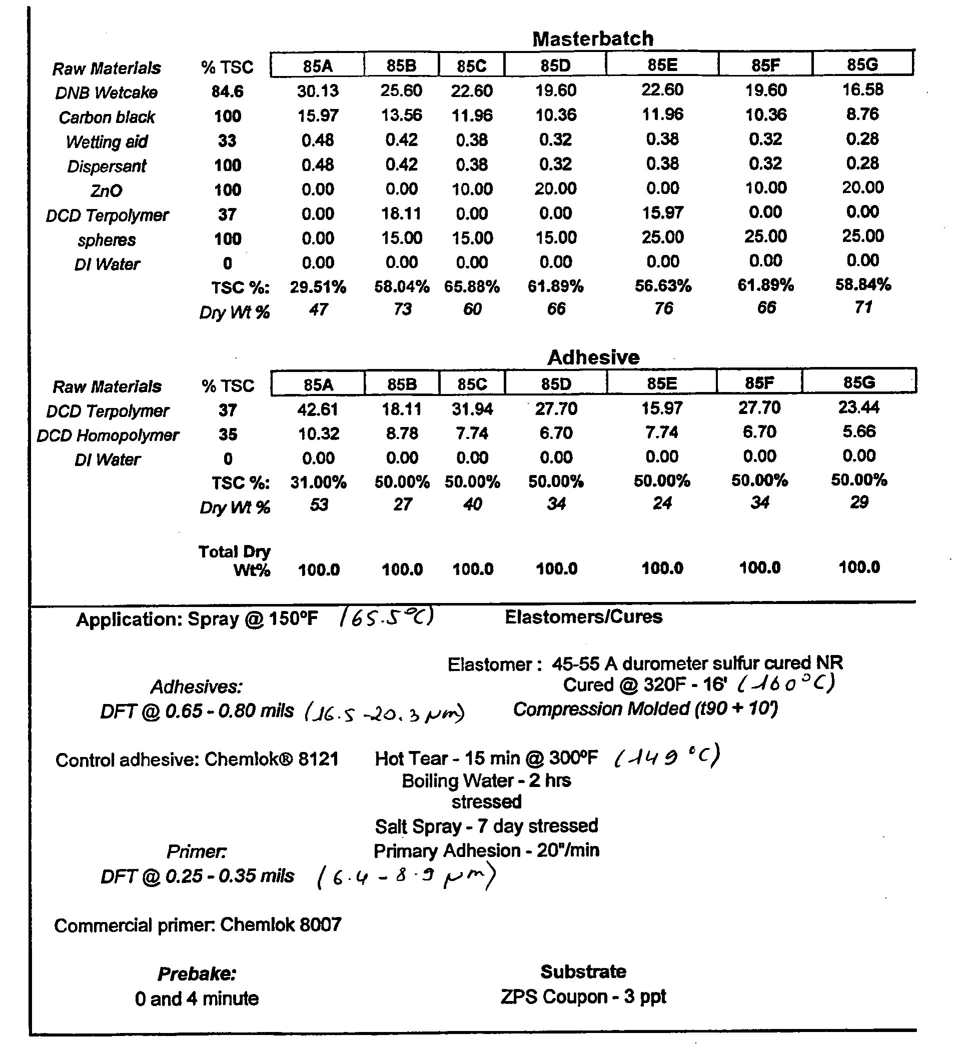

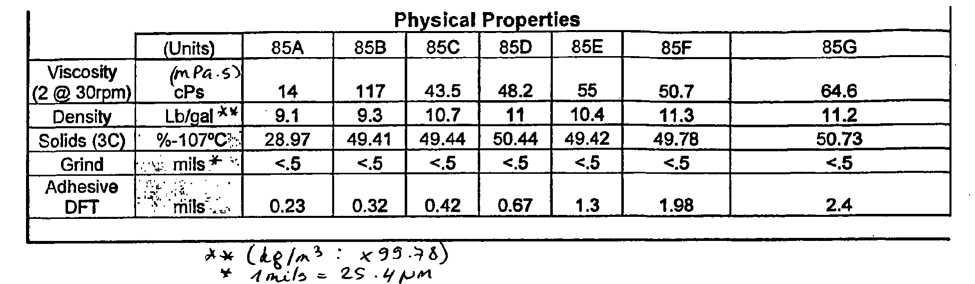

### Series 85 performance testing (% of bond area and type of failure)

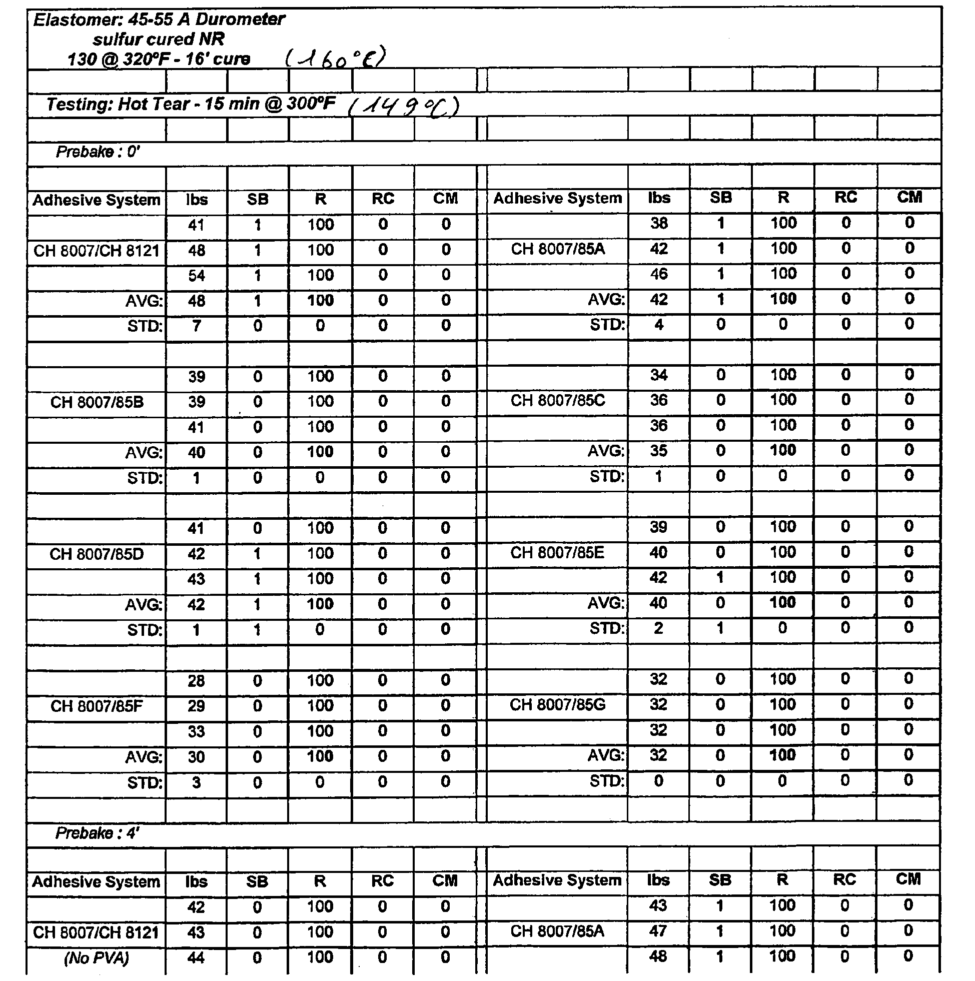

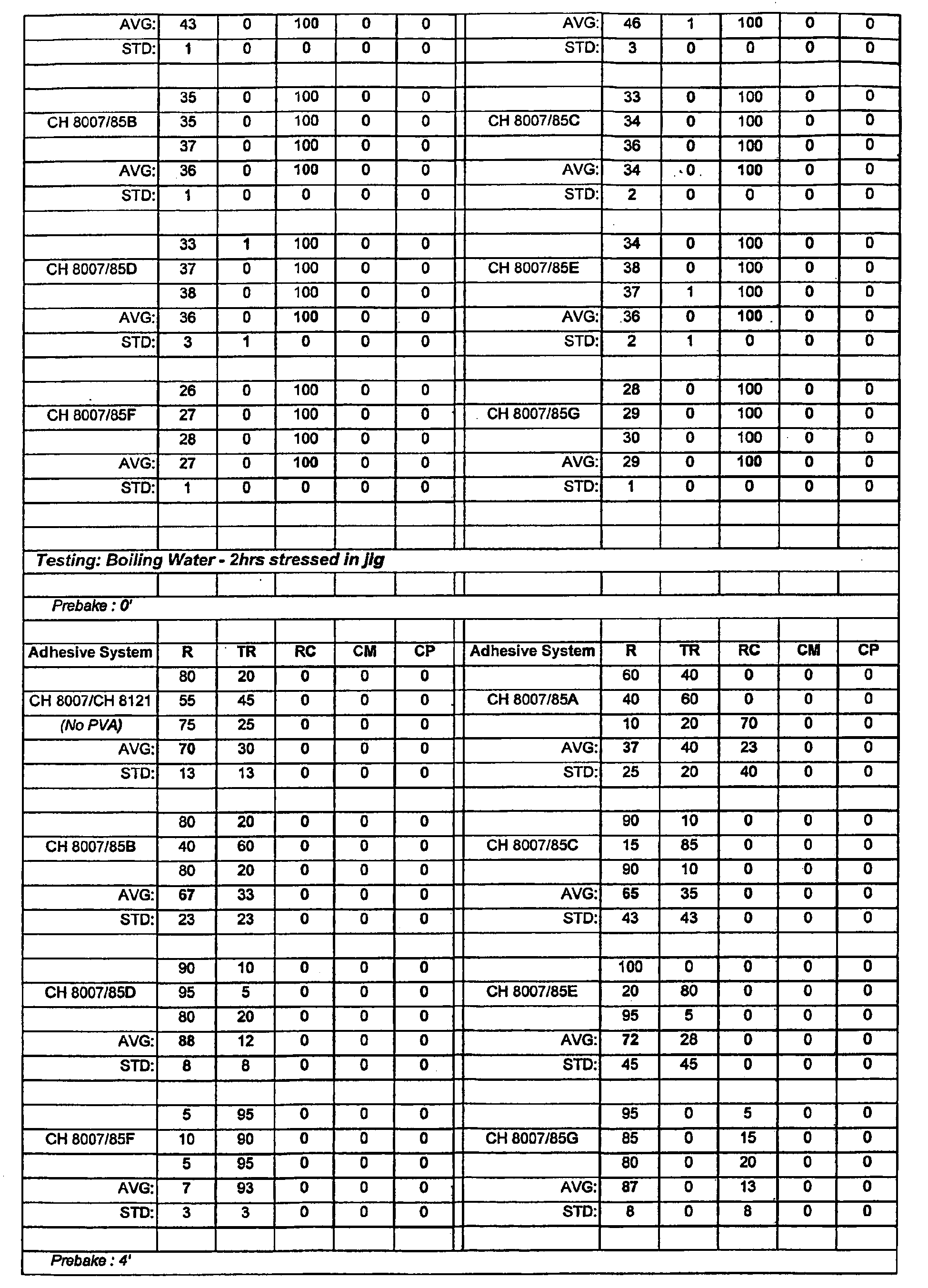

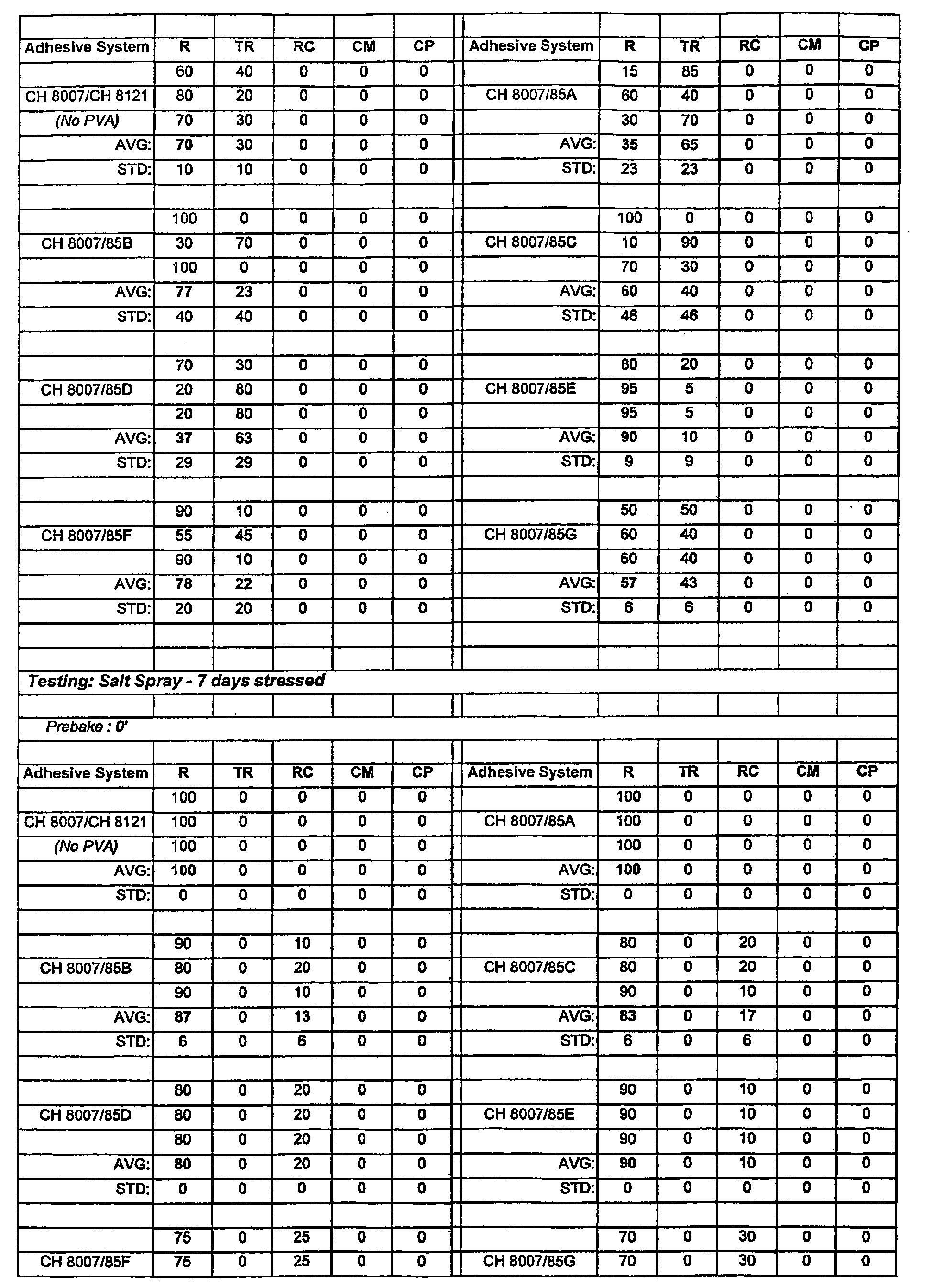

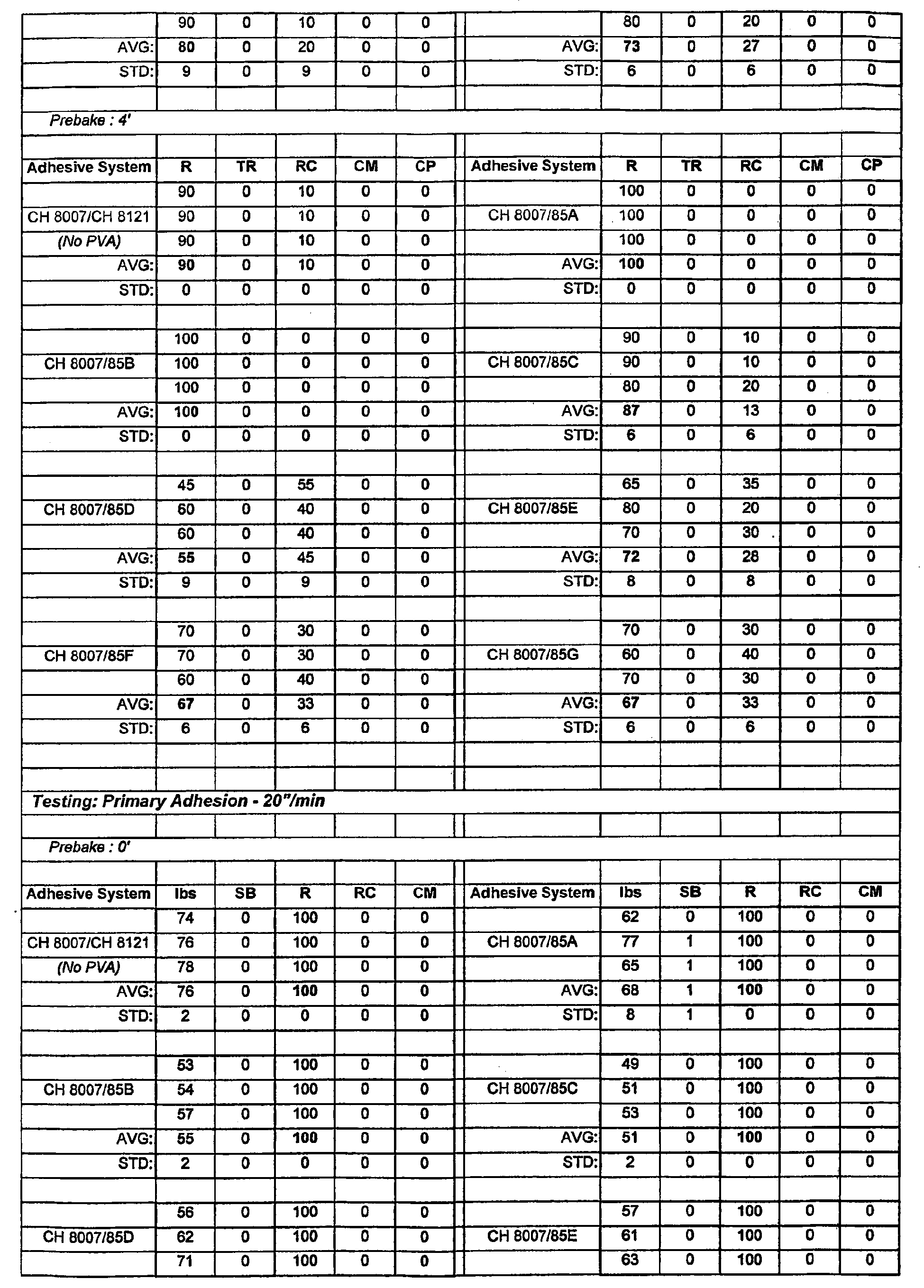

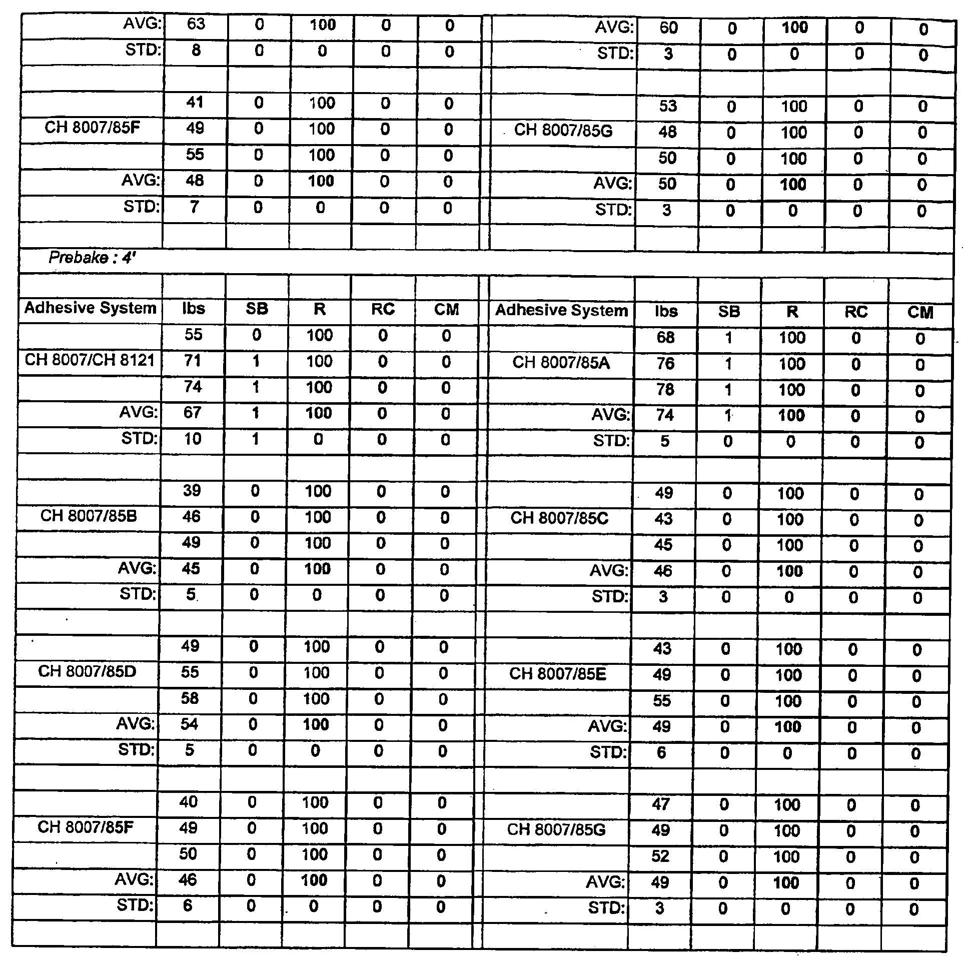

### Examples from 69 series aqueous RTM adhesive.

| | | **Masterbatch** | | | | | | | | | |
|---|---|---|---|---|---|---|---|---|---|---|---|
| ***Raw Materials*** | **% TSC** | **69A** | **69B** | **69C** | **69D** | **69E** | **69F** | **69G** | **69H** | **691** | **69J** |
| *DNB Wetcake* | 82.5 | 30.13 | 25.60 | 22.60 | 19.60 | 22.60 | 19.60 | 16.75 | 19.60 | 16.57 | 13.57 |
| *Carbon black* | 100 | 15.97 | 13.58 | 11.98 | 10.38 | 11.98 | 10.38 | 8.77 | 10.38 | 8.77 | 7.17 |
| *Wetting aid* | 33 | 0.48 | 0.41 | 0.36 | 0.31 | 0.36 | 0.31 | 0.26 | 0.31 | 0.26 | 0.22 |
| *Dispersant* | 100 | 0.48 | 0.41 | 0.36 | 0.31 | 0.36 | 0.31 | 0.26 | 0.31 | 0.26 | 0.22 |
| *ZnO* | 100 | 0.00 | 0.00 | 10.00 | 20.00 | 0.00 | 10.00 | 20.00 | 0.00 | 10.00 | 20.00 |
| *spheres* | 100 | 0.00 | 15.00 | 15.00 | 15.00 | 25.00 | 25.00 | 25.00 | 35.00 | 35.00 | 35.00 |
| *DI Water* | 0 | 0.00 | 0.00 | 0.00 | 0.00 | 0.00 | 0.00 | 0.00 | 0.00 | 0.00 | 0.00 |
| | TSC %: | 30.00% | 28.11% | 28.00% | 28.00% | 28.00 % | 28.00% | 28.00% | 28.00% | 28.00% | 28.00% |
| | *Dry Wt %* | *47* | *55* | *60* | *66* | *60* | *66* | *71* | *66* | *71* | *76* |
| | | | | | | | | | | | |
| | | **Adhesive** | | | | | | | | | |
| *DCD Terpolymer* | **37** | 42.61 | 36.23 | 31.95 | 27.70 | 31.95 | 27.70 | 23.45 | 27.70 | 23.45 | 19.17 |
| DCD *Homopolymer* | **35** | 10.32 | 8.78 | 7.75 | 6.70 | 7.75 | 6.70 | 5.67 | 6.70 | 5.67 | 4.65 |
| *DI Water* | **0** | 0.00 | | 0.00 | 0.00 | 0.00 | 0.00 | 0.00 | 0.00 | 0.00 | 0.00 |
| | **TSC %:** | **31.00%** | **40.00%** | **40.00%** | **40.00%** | **40.00** % | **40.00%** | **40.00%** | **40.00%** | **40.00%** | **40.00%** |
| | *Dry Wt* | *53* | *45* % | *40* | *34* | *40* | *34* | *29* | *34* | *29* | *24* |
| | | | | | | | | | | | |
| | **Dry Wt%** | **100** | **100** | **100** | **100** | **100** | **100** | **100** | **100** | **100** | **100** |
| | | | | | | | | | | | |

| |
|---|
| |
| Application: Sprayed @ adhesive temperature of 150°F (66°) |
| Rubber type and cure:: 45-55 A durometer sulfur cured NR |
| cured @ 320 °F (160 °C) - 16' |
| Compression Molded (t90 + 10') |
| Hot Tear - 15 min @ 300°F (149°C) |
| Adhesive DFT @ 0.65 - 0.80 mils (16 - 20µm) |
| Boiling Water - 2 hrs stressed |
| Salt Spray - 7 day stressed |
| Primary Adhesion - peeled at 20"/min (50 cm/min) |
| Control commercial adhesive: Chemlok 8121 |
| Primer DFT @ 0.25 - 0.35 mils (6-9µm) |
| Commerial primer: Chemlok 8007 |
| Prebake: 0 and 4 min. |
| Substrate: Zinc phosphatized steel |
| |

| | | | **Physical Properties** | | | | | | | | |
|---|---|---|---|---|---|---|---|---|---|---|---|
| | *(Units)* | **69A** | **69B** | **69C** | **69D** | **69E** | **69F** | **69G** | **69H** | **691** | **69J** |
| Viscosity (2 @ 30rpm) | (mPa·s) *cPs* | 15 | 22 | 17.5 | 18.8 | 16.1 | 14.6 | 13 | 13.1 | 14.2 | 15.1 |
| Density | *lb*/*gal* (kg/m³ : ×99,78) | 9.4 | 10 | 10.2 | 9.9 | 9.6 | 10.2 | 10.3 | 10.2 | 10.1 | 10.2 |
| Solids (3B) | %-68°C | 29.8 | 39.3 | 40.13 | 39.24 | 39.55 | 41..94 | 36.67 | 35.56 | 38.73 | 40.22 |
| Grind | *mils* 1 mil = 25.4 µm | 0.5 | 0 | 0 | 0 | 0 | 0 | 0 | 0 | 0 | 0 |
| | | | | | | | | | | | |

### Series 69 performance testing (% of bond area and type of failure)

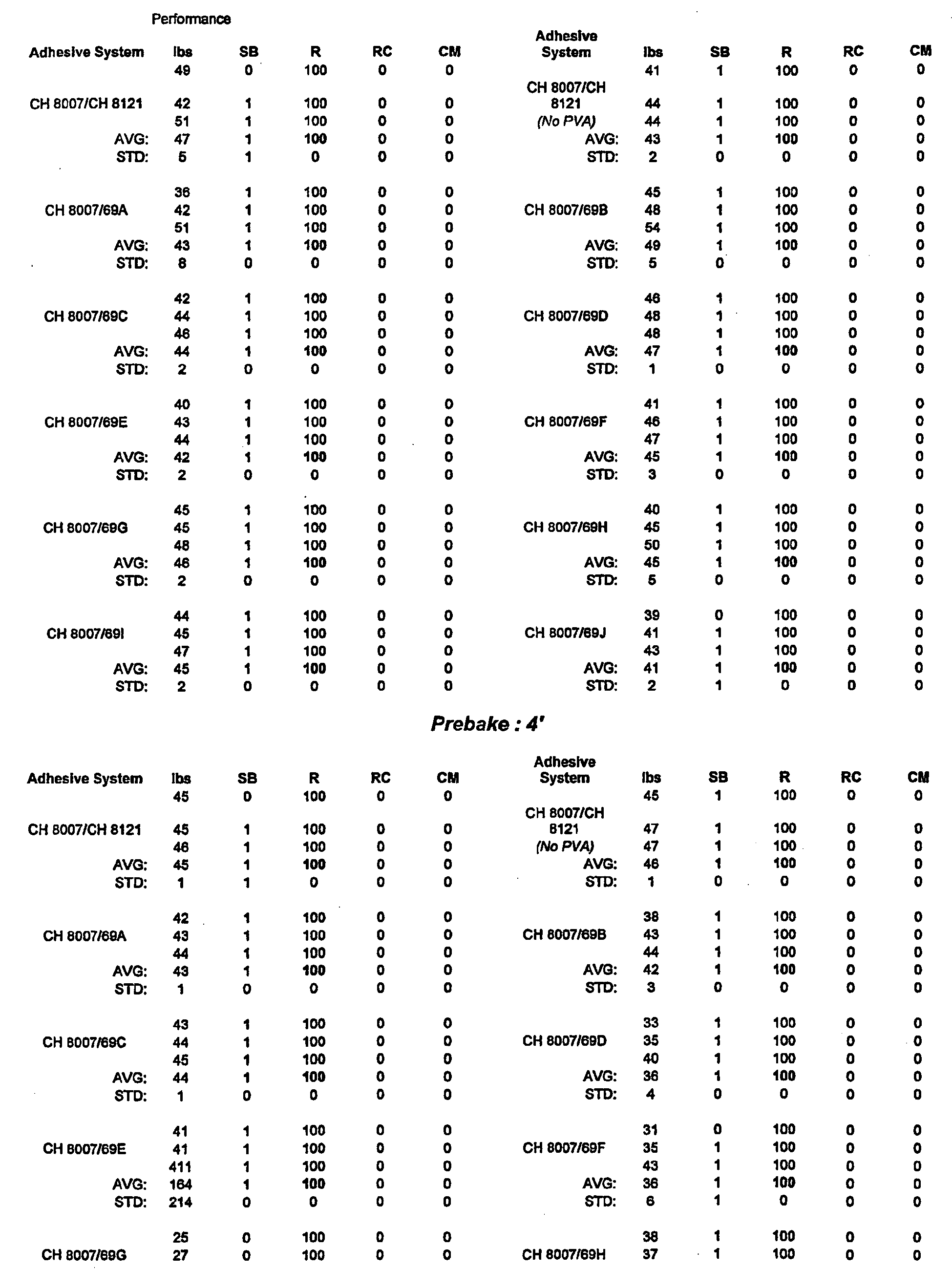

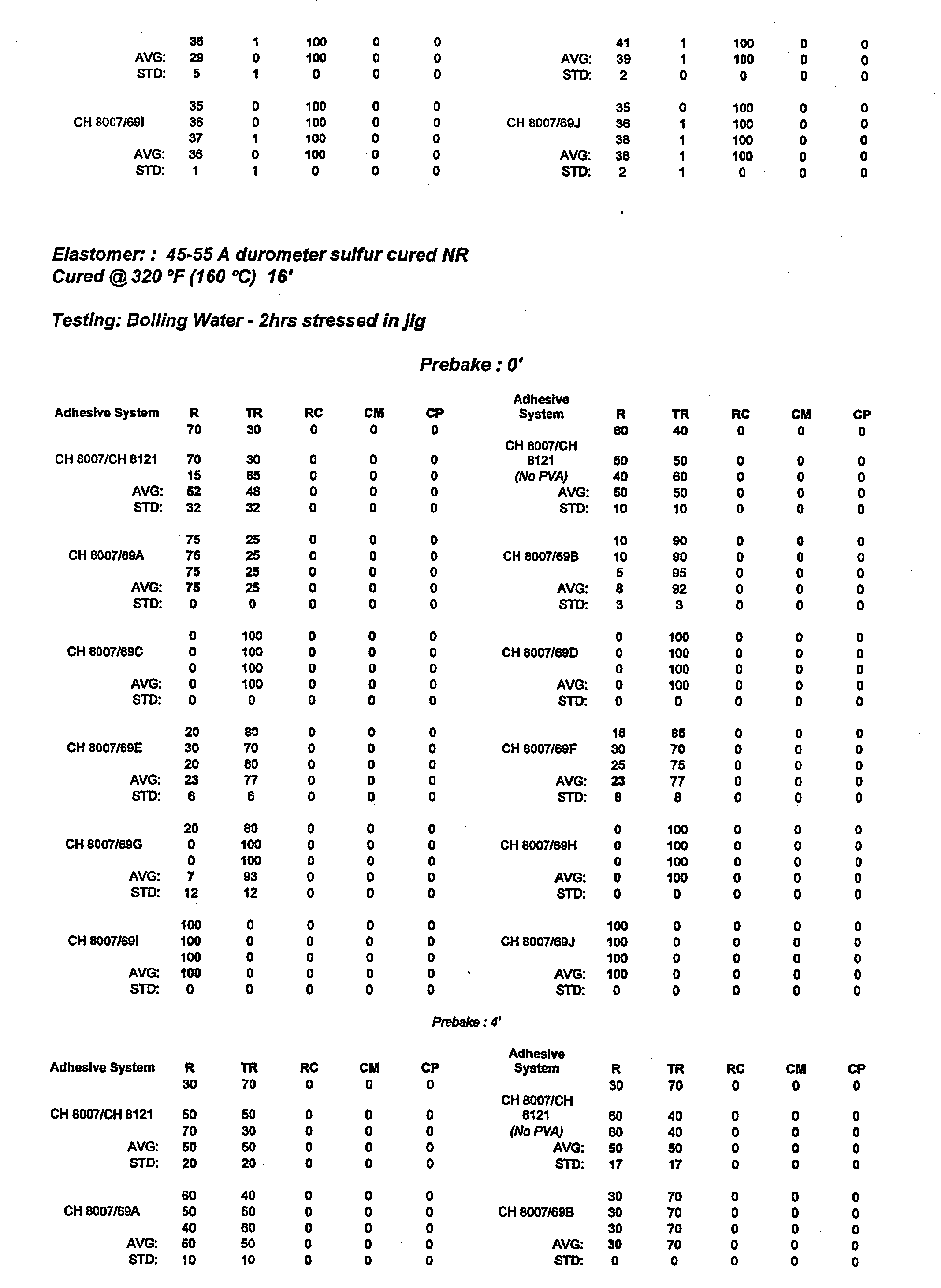

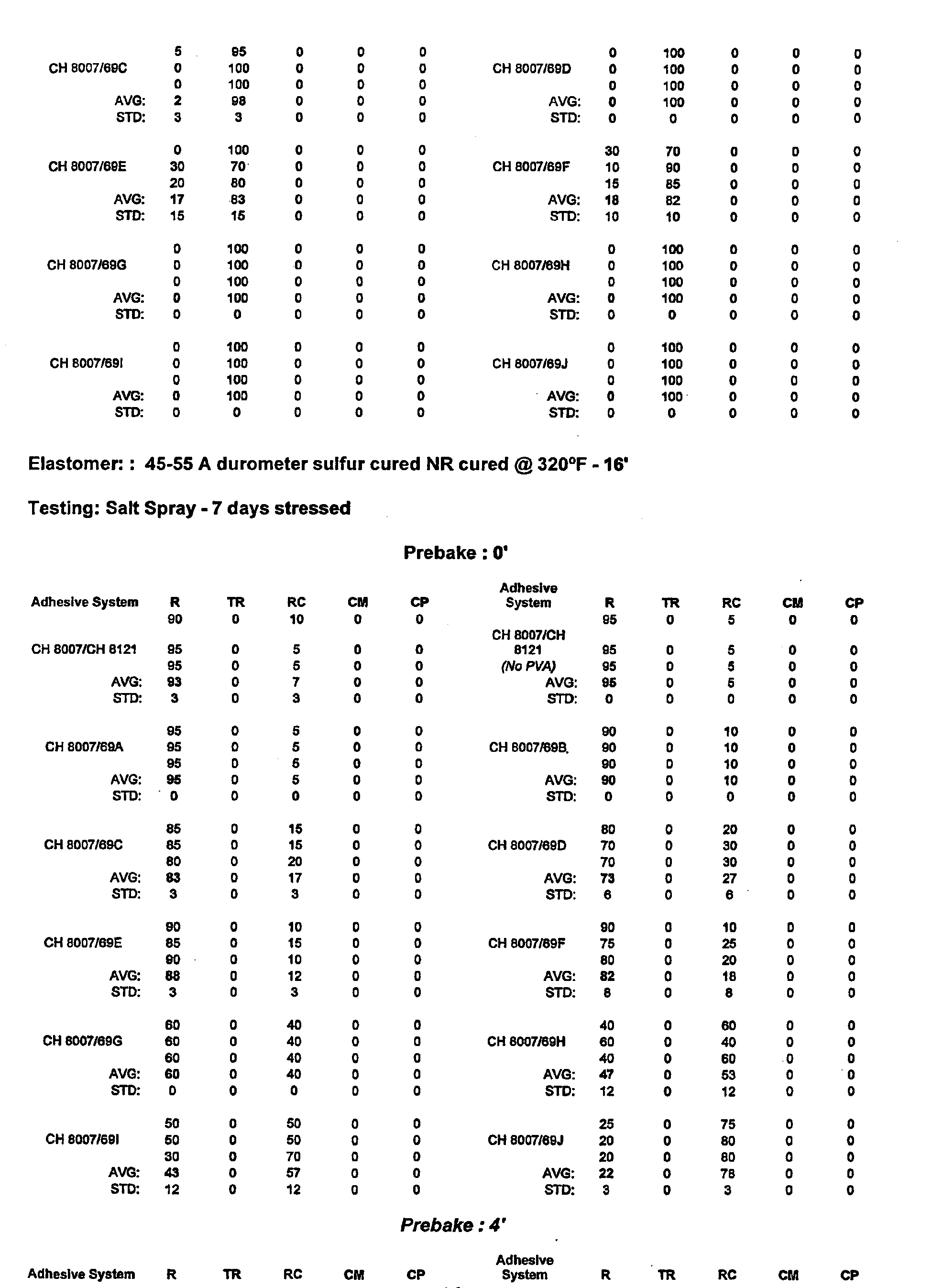

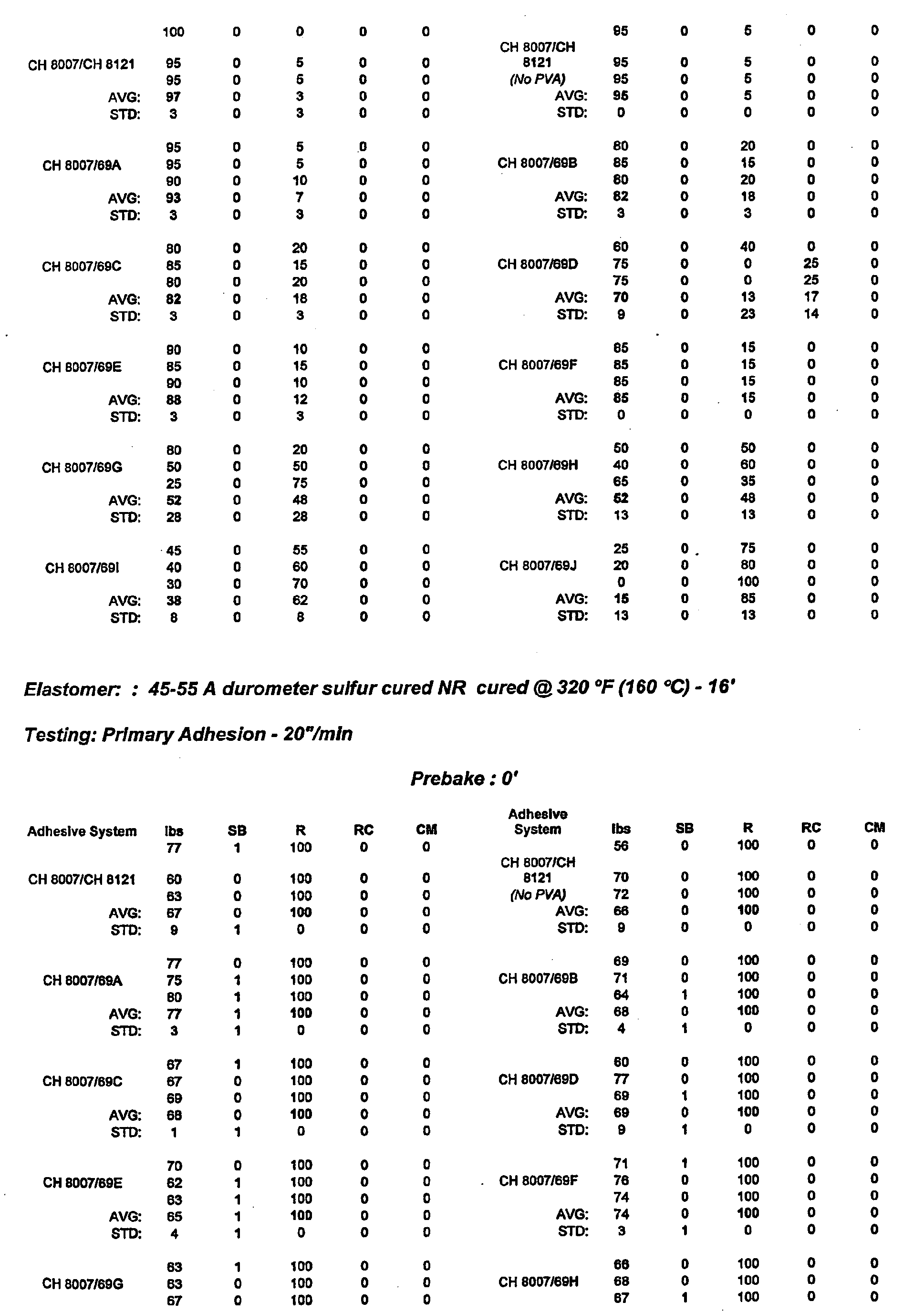

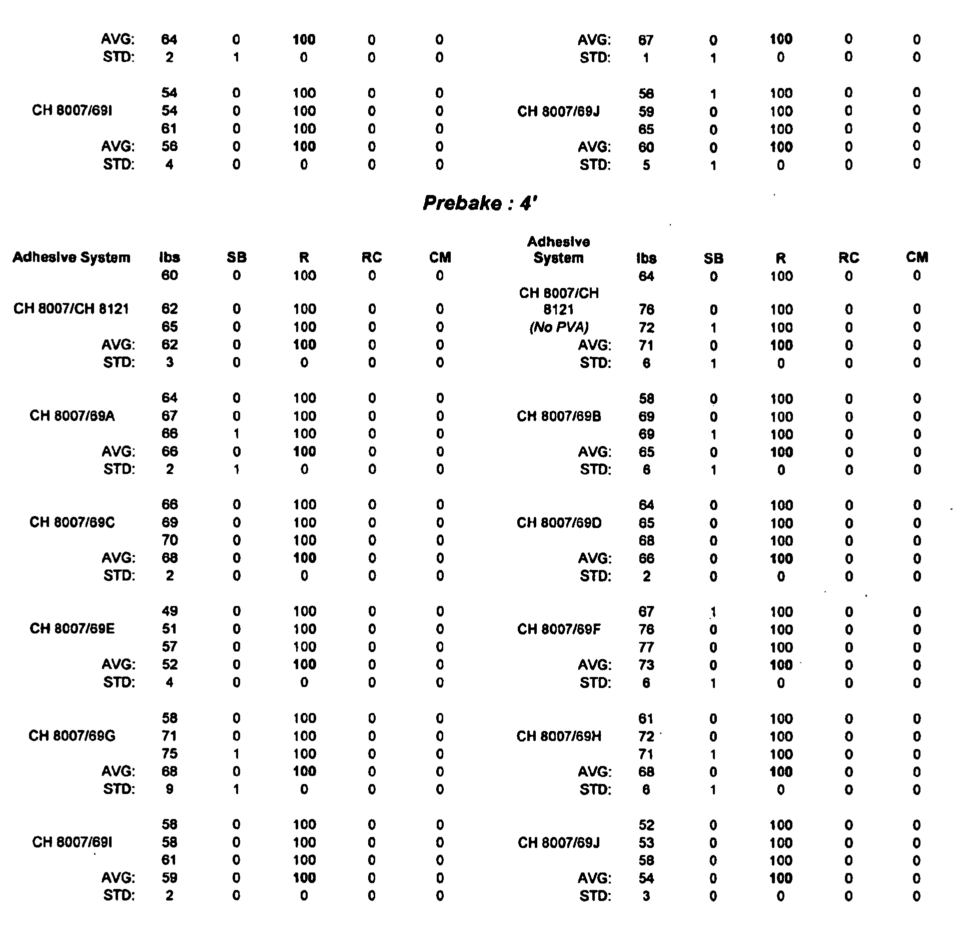

The invention includes a rubber to metal adhesive for bonding an elastomer to a metal. The sprayable rubber to metal adhesive includes a plurality of microspheres with the adhesive having a weight percent concentration of at least one percent of the microspheres. The rubber to metal adhesive preferably has a viscosity less than 500 cP (Brookfield LVT 2 @ 30 rpm). The sprayable rubber to metal adhesive is comprised of a plurality of nonsolubable spheroidal particle microspheres. The sprayable rubber to metal adhesive has a weight percent concentration of at least one percent of the microspheres wherein the adhesive has a sprayable viscosity less than 500 cP* cP = mPa·S (Brookfield LVT 2 @ 30 rpm). Preferably the rubber to metal adhesive includes ≥5 wt. % of the microspheres, more preferably ≥10 wt. % of the microspheres. Preferably the rubber to metal adhesive includes ≤ 40 wt. % of the microspheres, more preferably ≤ 35 wt. %. Preferably the rubber to metal adhesive has a microsphere range of about 5 to 35 wt. %, more preferably a microsphere range of about 15 to 30 wt. %, and most preferably a microsphere range of about 19 to 26 wt. % . Preferably the rubber to metal adhesive viscosity is in the range of 50 to 500 cP (Brookfield LVT 2 @ 30 rpm). Preferably the microspheres have a surface area less than 20m²/cc , more preferably ≤ 15m²/cc, more preferably ≤ 10m²/cc, more preferably ≤ 9m²/cc, most preferably ≤ 8m²/cc. Preferably the microspheres are ceramic microspheres with the microspheres comprised of a ceramic. Preferably the microspheres are comprised of hollow spheres, preferably ceramic hollow spheres with relatively thick walls as compared to the sphere outer dimension diameter wherein the hollow spheres are incompressible with a crush strength of at least 20,000 p.s.i. (138 MPa). Preferably the microspheres are comprised of a silica alumina ceramic. Preferably the microspheres are comprised of aluminum oxide. Preferably the microspheres are comprised of silicon dioxide. Preferably the microspheres are zeeospheres. Preferably the microspheres have a density in the range of about 2 to 2.6 (gm/cc).

The invention includes a method of making the elastomer to metal adhesive for bonding an elastomer to a metal. The method includes providing an elastomer to metal adhesive fluid composition, providing a plurality of microspheres, and adding the plurality of microspheres to the elastomer to metal adhesive fluid to provide an elastomer to metal adhesive having a viscosity less than 500 cP* cP = mPa·s (Brookfield LVT 2 @ 30 rpm). The method of making the sprayable elastomer rubber to metal adhesive for bonding an elastomer to a metal includes providing an rubber elastomer to metal adhesive fluid composition. Preferably the provided rubber to metal adhesive composition includes DNB. The method includes providing a plurality of microspheres, adding the plurality of microspheres to the elastomer to metal adhesive fluid composition to provide a sprayable elastomer to metal adhesive having a viscosity less than 500 cP* cP = mPa·s (Brookfield LVT 2 @ 30 rpm). Preferably the microspheres are added to provide a viscosity of from 50 to 500 cP* cP = mPa·s (Brookfield LVT 2 @ 30 rpm). Preferably the method includes adding at least one percent by weight of the microspheres to the elastomer to metal adhesive fluid, more preferably ≥5 wt. % of the microspheres, most preferably ≥10 wt. % of the microspheres. Preferably the method includes adding ≤ 40 wt. % of the microspheres, more preferably ≤ 35 wt.. Preferably the method includes adding microspheres to the elastomer to metal adhesive in the range of about 5 to 35 wt. % microspheres, more preferably a range of about 15 to 30 wt. %, and most preferably a range of about 19 to 26 wt. %. Preferably the rubber to metal adhesive viscosity is in the range of 50 to 490 cP (Brookfield LVT 2 @ 30 rpm). Preferably the microspheres have a surface area less than 20m²/cc , more preferably ≤ 15m²/cc, more preferably ≤ 10m²/cc, more preferably ≤ 9m²/cc, most preferably ≤ 8m²/cc. Preferably the microspheres are ceramic microspheres with the microspheres comprised of a ceramic. Preferably the microspheres are comprised of hollow spheres, preferably ceramic hollow spheres with relatively thick walls as compared to the sphere outer dimension diameter wherein the hollow spheres are incompressible with a crush strength of at least 20,000 p.s.i. (138 MPa). Preferably the microspheres are comprised of a silica alumina ceramic. Preferably the microspheres are comprised of aluminum oxide. Preferably the microspheres are comprised of silicon dioxide. Preferably the microspheres are zeeospheres. Preferably the microspheres have a density in the range of about 2 to 2.6 (gm/cc). Preferably the microspheres are added to provide a sprayable viscosity greater than 50 cP (mPa·s) (Brookfield LVT 2 @ 30 rpm), preferably a viscosity in range of 60 to 450 cP (mPa·s) (Brookfield LVT 2 @ 30 rpm). Preferably the elastomer to metal adhesive fluid composition includes DNB, CNR, an acid scavenger, a maleimide, and a chlorosulfonated polyethylene.

### Preferred Composition

### Ranges

| | ***Preferred*** | | ***More Preferred*** | | **Preferred Composition** |
|---|---|---|---|---|---|
| **Material** | **Low** | **High** | **Low** | **High** | **(±1)** |
| DNB | 15 | 25 | 17 | 23 | 20 |
| acid | 10 | 30 | 10 | 15 | 10 |
| scavenger | | | | | |
| maleimide | 5 | 15 | 5 | 10 | 10 |
| carbon black | 0 10 | | 3 | 8 | 4 |
| Zeeosphere | 5 | 35 | 20 | 25 | 25 |
| *Hypalon | 5 | 45 | 15 | 20 | 16 |
| *CNR | 5 | 45 | 15 | 20 | 15 |
| *50:50 with | | | | | |
| low HYP:low | | | | | |
| CNR | | | | | |
| *50:50 with | | | | | |
| high | | | | | |
| HYP:high | | | | | |
| CNR | | | | | |
| *66.6:33.3 | | | | | |
| with high | | | | | |
| HYP:low | | | | | |
| CNR | | | | | |

## Claims

1. A rubber to metal adhesive, said rubber to metal adhesive comprised of inert, incompressible, spheroidal particles having a BET surface area of from 0.1 to 10 m²/g and a 50^{TH} percentile particle diameter (D50) of 5 to 25 µm, said adhesive having a weight percent concentration of at least one percent of said spheroidal particles wherein said adhesive has a viscosity less than or equal to 500 mPa·s (Brookfield LVT 2 @ 30 rpm).

2. A rubber to metal adhesive as claimed in claim 1 wherein said spheroidal particles have a surface area less than 20m²/cc.

3. A rubber to metal adhesive as claimed in claim 1 or claim 2 wherein said spheroidal particles are comprised of a ceramic.

4. A rubber to metal adhesive as claimed in any one of claims 1 to 3 wherein said spheroidal particles are comprised of hollow spheres.

5. A rubber to metal adhesive as claimed in any one of claims 1 to 4 wherein said spheroidal particles are comprised of a silica alumina ceramic.

6. A rubber to metal adhesive as claimed in any one of claims 1 to 4 wherein said spheroidal particles are comprised of aluminium oxide.

7. A rubber to metal adhesive as claimed in any one of claims 1 to 4 wherein said spheroidal particles are comprised of silicon dioxide.

8. A rubber to metal adhesive as claimed in any one of claims 1 to 4 wherein said spheroidal particles are ceramic microspheres.

9. A rubber to metal adhesive as claimed in any previous claim wherein said spheroidal particles have a density in the range of about 2 to 2.6 gm/cc.

10. A rubber to metal adhesive as claimed in any previous claim in the form of an adhesive composition having a pigment grind of 0 to 0.05 mm (0-2 mils) measured by the Hegman® guage, said adhesive being sprayable at a total solids concentration of 25 ± 2 wt.%, having a viscosity of from 50 to 500 cP (Brookfield LVT 2 @ 30 rpm) and comprising a nitroso compound, a film-forming halogenated polyolefin, an acid acceptor and from 5% to 35 dry wt.% of said spheroidal particles.

11. A rubber to metal adhesive according to claim 10 wherein said nitroso compound is present at 15 to 25 dry wt %.

12. A rubber to metal adhesive according to claim 10 or claim 11 wherein said flm-forming halogenated polyolefin is present at from 0.1 to 15 dry wt. %.

13. A rubber to metal adhesive according to claim 11 wherein said nitroso compound is present at from 17 to 23 dry wt. %.

14. A rubber to metal adhesive according to any one of claims 10 to 13 wherein said film-forming halogenated polyolefin is a 40-60 to 60-40 wt. ratio blend of chlorosulfonated polyethylene to chlorinated rubber.

15. A rubber to metal adhesive according to any one of claims 10 to 13 wherein said film-forming halogenated polyolefin comprises a 60-70 to 40-30 wt. ratio blend of chlorosulfonated polyethylene and chlorinated natural rubber.

16. A rubber to metal adhesive according to any one of claims 10 to 15 wherein said acid acceptor is present at 10 to 30 dry wt.%.

17. A rubber to metal adhesive according to claim 16 wherein acid acceptor is present at from 10 to 15 dry wt.%.

18. A rubber to metal adhesive according to any one of claims 10 to 17 wherein said film-forming halogenated polyolefin is selected from the group consisting of chlorinated natural rubber, chlorinated polychloroprene, chlorinated polybutadiene, chlorinated poly (butadiene styrene), chlorinated poly(ethylene propylene), chlorinated poly (ethylene propylene non-conjugated diene), chlorinated polyethylene, chlorosulfonated polyethylene, poly (α-chloroacrylonitrile 2,3-dichloro-1,3-butadiene), brominated poly (2,3-dichloro-1,3-butadiene), and mixtures thereof.

19. A rubber to metal adhesive according to any one of claims 10 to 18 further comprising an inert filler having a BET surface area greater than 10 m²/g substituted at up to 10 wt.% of said inert, incompressible, spheroidal particles.

20. A rubber to metal adhesive according to any one of claims 10 to 19 wherein said nitroso compound is selected from the group consisting of m-dinitrosobenzene, p-dinitrosobenzene, m-dinitrosonaphthalene, p-dinitrosonaphthalene, 2,5-dinitroso-p-cymeme, 2-methyl-1,4-dinitrosobenzene, 2-methyl-5-chloro-1,4-dinitrosobenzene, 2-fluoro-1,4-dinitrosobenzene, 2-methoxy-1-3-dinitrosobenzene, 5-chloro-1,3-dinitrosobenzene, 2-benzyl-1,4-dinitrosobenzene, 2-cyclohexyl-1,4-dinitrosobenzene and combinations thereof.

21. A rubber to metal adhesive according to any one of claims 10 to 20 further comprising from 5 to 15 wt.% of a co-curative capable of forming covalent crossbonds between said adhesive and an elastomer.

22. A method of making a rubber to metal adhesive, said method comprising:
providing an elastomer to metal adhesive fluid,
providing inert, incompressible, spheroidal particles having a BET surface area of from 0.1 to 10 m²/g and a 50^{TH} percentile particle diameter (D50) of 5 to 25 µm,
adding at least one percent by weight of said spheroidal particles to said elastomer to metal adhesive fluid to provide an elastomer to metal adhesive having a viscosity less than or equal to 500 mPa·s (Brookfield LVT 2 @ 30 rpm).

23. A method as claimed in claim 22 wherein said spheroidal particles have a surface area less than 20m²/cc.

24. A method as claimed in claim 22 or claim 23 wherein said spheroidal particles are comprised of a ceramic.

25. A method as claimed in any one of claims 22 to 24, wherein said spheroidal particles are comprised of a silica alumina ceramic.

26. A method as claimed in any one of claims 22 to 24, wherein said spheroidal particles are comprised of aluminium oxide.

27. A method as claimed in any one of claims 22 to 24, wherein said spheroidal particles are comprised of silicon dioxide.

28. A method as claimed in any one of claims 22 to 24, wherein said spheroidal particles are ceramic microspheres.

29. A method as claimed in any one of claims 22 to 28, wherein spheroidal particles are added to provide a sprayable viscosity greater than 50 mPa·s (Brookfield LVT 2 @ 30 rpm).

30. A method as claimed in any one of claims 22 to 29 in which the elastomer to metal adhesive fluid comprises a nitroso compound, a film-forming halogenated polyolefin, and an acid acceptor, and the spheroidal particles are added from 5% to 35 dry wt.%, to produce an adhesive having a pigment grind of 0 to 0.05 mm (0-2 mils) measured by the Hegman® guage, said adhesive being sprayable at a total solids concentration of 25 ± 2 wt% and having a viscosity of from 50 to 500 mPa·s (Brookfield LVT @ 30 rpm).

31. A method of bonding an elastomer to a metal surface, said method comprised of: providing a metal surface, providing a rubber to metal adhesive including a nitroso compound, a film-forming halogenated polyolefin, an acid acceptor and from 5% to 35 dry wt% of inert, incompressible, spheroidal particles having a BET surface area of from 0.1 to 10 m²/g and a 50^{TH} percentile particle diameter (D50) of 5 to 25 µm, said rubber to metal adhesive having a viscosity of from 50 to 500 mPa·s (Brookfield LVT 2 @ 30 rpm), and spraying said provided rubber to metal adhesive onto said metal surface.

32. A method as claimed in claim 31, said method including spraying said provided rubber to metal adhesive onto said metal surface in an amount to provide a dry film thickness of from 0.007 to 0.0508 mm (0.0003 to 0.002 inch) +/- 0.0025 to 0.0076 mm (0.0001 to 0.0003 inch) in one or two sprayed layers.

## Patentansprüche

1. Kautschuk-auf-Metall-Haftmittel, wobei das Kautschuk-auf-Metall-Haftmittel inerte, nicht-kompressible kugelförmige Teilchen mit einer BET-Oberfläche von 0,1 bis 10 m²/g und einem 50. Perzentil des Teilchendurchmessers (D50) von 5 bis 25 µm umfasst, wobei das Haftmittel eine Konzentration, in Gewichtsprozent, der kugelförmigen Teilchen von mindestens einem Prozent aufweist, wobei das Haftmittel eine Viskosität von weniger als oder gleich 500 mPa · s (Brookfield LVT 2 bei 30 U/min) aufweist.

2. Kautschuk-auf-Metall-Haftmittel nach Anspruch 1, bei dem die kugelförmigen Teilchen eine Oberfläche von weniger als 20 m²/cm³ aufweisen.

3. Kautschuk-auf-Metall-Haftmittel nach Anspruch 1 oder Anspruch 2, bei dem die kugelförmigen Teilchen aus einer Keramik aufgebaut sind.

4. Kautschuk-auf-Metall-Haftmittel nach einem der Ansprüche 1 bis 3, bei dem die kugelförmigen Teilchen aus hohlen Kügelchen aufgebaut sind.

5. Kautschuk-auf-Metall-Haftmittel nach einem der Ansprüche 1 bis 4, bei dem die kugelförmigen Teilchen aus einer Siliziumdioxid-Aluminiumoxid-Keramik aufgebaut sind.

6. Kautschuk-auf-Metall-Haftmittel nach einem der Ansprüche 1 bis 4, bei dem die kugelförmigen Teilchen aus Aluminiumoxid aufgebaut sind.

7. Kautschuk-auf-Metall-Haftmittel nach einem der Ansprüche 1 bis 4, bei dem die kugelförmigen Teilchen aus Siliziumdioxid aufgebaut sind.

8. Kautschuk-auf-Metall-Haftmittel nach einem der Ansprüche 1 bis 4, bei dem die kugelförmigen Teilchen Keramik-Mikrokügelchen sind.

9. Kautschuk-auf-Metall-Haftmittel nach einem der vorstehenden Ansprüche, bei dem die kugelförmigen Teilchen eine Dichte im Bereich von etwa 2 bis 2,6 g/cm³ aufweisen.

10. Kautschuk-auf-Metall-Haftmittel nach einem der vorstehenden Ansprüche in der Form einer Haftmittelzusammensetzung, die einen Pigmentmahlgrad von 0 bis 0,05 mm (0 bis 2 mil), gemessen mit einem Hegman^{®}-Messgerät, aufweist, wobei das Haftmittel bei einer Gesamtfeststoffkonzentration von 25 ± 2 Gew.-% versprüht werden kann, eine Viskosität von 50 bis 500 cP (Brookfield LVT 2 bei 30 U/min) aufweist und eine Nitrosoverbindung, ein filmbildendes halogeniertes Polyolefin, einen Säureakzeptor und von 5 Gew.-% bis 35 Gew.-%, bezogen auf das Trockengewicht, der kugelförmigen Teilchen umfasst.

11. Kautschuk-auf-Metall-Haftmittel nach Anspruch 10, bei dem 15 Gew.-% bis 25 Gew.-%, bezogen auf das Trockengewicht, der Nitrosoverbindung vorliegen.

12. Kautschuk-auf-Metall-Haftmittel nach Anspruch 10 oder Anspruch 11, bei dem 0,1 Gew.-% bis 15 Gew.-%, bezogen auf das Trockengewicht, des filmbildenden halogenierten Polyolefins vorliegen.

13. Kautschuk-auf-Metall-Haftmittel nach Anspruch 11, bei dem 17 Gew.-% bis 23 Gew.-%, bezogen auf das Trockengewicht, der Nitrosoverbindung vorliegen.

14. Kautschuk-auf-Metall-Haftmittel nach einem der Ansprüche 10 bis 13, bei dem das filmbildende halogenierte Polyolefin ein Gemisch aus chlorsulfoniertem Polyethylen und chloriertem Kautschuk in einem Gewichtsverhältnis von 40-60:60-40 ist.

15. Kautschuk-auf-Metall-Haftmittel nach einem der Ansprüche 10 bis 13, bei dem das filmbildende halogenierte Polyolefin ein Gemisch aus chlorsulfoniertem Polyethylen und chloriertem Naturkautschuk in einem Gewichtsverhältnis von 60-70:40-30 umfasst.

16. Kautschuk-auf-Metall-Haftmittel nach einem der Ansprüche 10 bis 15, bei dem 10 Gew.-% bis 30 Gew.-%, bezogen auf das Trockengewicht, des Säureakzeptors vorliegen.

17. Kautschuk-auf-Metall-Haftmittel nach Anspruch 16, bei dem 10 Gew.-% bis 15 Gew.-%, bezogen auf das Trockengewicht, des Säureakzeptors vorliegen.

18. Kautschuk-auf-Metall-Haftmittel nach einem der Ansprüche 10 bis 17, bei dem das filmbildende halogenierte Polyolefin aus der Gruppe, bestehend aus chloriertem Naturkautschuk, chloriertem Polychloropren, chloriertem Polybutadien, chloriertem Poly(butadien-styrol), chloriertem Poly(ethylen-propylen), chloriertem Poly(ethylen-propylen-nicht-konjugiertes Dien), chloriertem Polyethylen, chlorsulfoniertem Polyethylen, Poly(α-chloracrylnitril-2,3-dichlor-1,3-butadien), bromiertem Poly(2,3-dichlor-1,3-butadien) und Gemischen davon, ausgewählt ist.

19. Kautschuk-auf-Metall-Haftmittel nach einem der Ansprüche 10 bis 18, das ferner einen inerten Füllstoff mit einer BET-Oberfläche von mehr als 10 m²/g umfasst, der bis zu 10 Gew.-% der inerten, nicht-kompressiblen kugelförmigen Teilchen ersetzt.

20. Kautschuk-auf-Metall-Haftmittel nach einem der Ansprüche 10 bis 19, bei dem die Nitrosoverbindung aus der Gruppe, bestehend aus m-Dinitrosobenzol, p-Dinitrosobenzol, m-Dinitrosonaphthalin, p-Dinitrosonaphthalin, 2,5-Dinitroso-p-cymol, 2-Methyl-1,4-dinitrosobenzol, 2-Methyl-5-chlor-1,4-dinitrosobenzol, 2-Fluor-1,4-dinitrosobenzol, 2-Methoxy-1,3-dinitrosobenzol, 5-Chlor-1,3-dinitrosobenzol, 2-Benzyi-1,4-dinitrosobenzol, 2-Cyclohexyl-1,4-dinitrosobenzol und Kombinationen davon, ausgewählt ist.

21. Kautschuk-auf-Metall-Haftmittel nach einem der Ansprüche 10 bis 20, das ferner 5 bis 15 Gew.-% eines Hilfshärtungsmittels umfasst, das zwischen dem Haftmittel und einem Elastomer kovalente Vernetzungsbindungen bilden kann.

22. Verfahren zur Herstellung eines Kautschuk-auf-Metall-Haftmittels, wobei das Verfahren umfasst:
Bereitstellen eines Elastomer-auf-Metall-Haftmittelfluids,
Bereitstellen von inerten, nicht-kompressiblen kugelförmigen Teilchen mit einer BET-Oberfläche von 0,1 bis 10 m²/g und einem 50. Perzentil des Teilchendurchmessers (D50) von 5 bis 25 µm,
Zusetzen von mindestens einem Gewichtsprozent der kugelförmigen Teilchen zu dem Elastomer-auf-Metall-Haftmittelfluid, so dass ein Elastomer-auf-Metall-Haftmittel mit einer Viskosität von weniger als oder gleich 500 mPa · s (Brookfield LVT 2 bei 30 U/min) bereitgestellt wird.

23. Verfahren nach Anspruch 22, bei dem die kugelförmigen Teilchen eine Oberfläche von weniger als 20 m²/cm³ aufweisen.

24. Verfahren nach Anspruch 22 oder Anspruch 23, bei dem die kugelförmigen Teilchen aus einer Keramik aufgebaut sind.

25. Verfahren nach einem der Ansprüche 22 bis 24, bei dem die kugelförmigen Teilchen aus einer Siliziumdioxid-Aluminiumoxid-Keramik aufgebaut sind.

26. Verfahren nach einem der Ansprüche 22 bis 24, bei dem die kugelförmigen Teilchen aus Aluminiumoxid aufgebaut sind.

27. Verfahren nach einem der Ansprüche 22 bis 24, bei dem die kugelförmigen Teilchen aus Siliziumdioxid aufgebaut sind.

28. Verfahren nach einem der Ansprüche 22 bis 24, bei dem die kugelförmigen Teilchen Keramik-Mikrokügelchen sind.

29. Verfahren nach einem der Ansprüche 22 bis 28, bei dem die kugelförmigen Teilchen so zugesetzt werden, dass eine sprühfähige Viskosität von mehr als 50 mPa · s (Brookfield LVT 2 bei 30 U/min) bereitgestellt wird.

30. Verfahren nach einem der Ansprüche 22 bis 29, bei dem das Elastomer-auf-Metall-Haftmittelfluid eine Nitrosoverbindung, ein filmbildendes halogeniertes Polyolefin und einen Säureakzeptor umfasst und von 5 Gew.-% bis 35 Gew.-%, bezogen auf das Trockengewicht, der kugelförmigen Teilchen zugesetzt werden, so dass ein Haftmittel mit einem Pigmentmahlgrad von 0 bis 0,05 mm (0 bis 2 mil), gemessen mit einem Hegman^{®}-Messgerät, erzeugt wird, wobei das Haftmittel bei einer Gesamtfeststoffkonzentration von 25 ± 2 Gew.-% versprüht werden kann und eine Viskosität von 50 bis 500 mPa · s (Brookfield LVT 2 bei 30 U/min) aufweist.

31. Verfahren zum Kleben eines Elastomers auf eine Metalloberfläche, wobei das Verfahren umfasst: Bereitstellen einer Metalloberfläche, Bereitstellen eines Kautschuk-auf-Metall-Haftmittels, das eine Nitrosoverbindung, ein filmbildendes halogeniertes Polyolefin, einen Säureakzeptor und von 5 Gew.-% bis 35 Gew.-%, bezogen auf das Trockengewicht, inerte, nicht-kompressible kugelförmige Teilchen mit einer BET-Oberfläche von 0,1 bis 10 m²/g und einem 50. Perzentil des Teilchendurchmessers (D50) von 5 bis 25 µm umfasst, wobei das Kautschuk-auf-Metall-Haftmittel eine Viskosität von 50 bis 500 mPa · s (Brookfield LVT 2 bei 30 U/min) aufweist, und Sprühen des bereitgestellten Kautschuk-auf-Metall-Haftmittels auf die Metalloberfläche.

32. Verfahren nach Anspruch 31, wobei das Verfahren das Sprühen des bereitgestellten Kautschuk-auf-Metall-Haftmittels auf die Metalloberfläche in einer Menge umfasst, die eine Trockenfilmdicke von 0,007 bis 0,0508 mm (0,0003 bis 0,002 Zoll) ± 0,0025 bis 0,0076 mm (0,0001 bis 0,0003 Zoll) in einer oder zwei aufgesprühten Schichten bereitstellt.

## Revendications

1. Adhésif caoutchouc à métal, ledit adhésif caoutchouc à métal étant composé de particules sphéroïdales, incompressibles, inertes, ayant une surface spécifique BET de 0,1 à 10 m²/g et un diamètre de particule au 50^{ème} percentile (D50) de 5 à 25 µm, ledit adhésif ayant un pourcentage en poids de concentration d'au moins un pour cent desdites particules sphéroïdales, ledit adhésif ayant une viscosité inférieure ou égale à 500 mPa.s (Brookfield LVT 2 à 30 tpm).

2. Adhésif caoutchouc à métal selon la revendication 1, dans lequel lesdites particules sphéroïdales ont une surface spécifique inférieure à 20 m²/cm³.

3. Adhésif caoutchouc à métal selon la revendication 1 ou la revendication 2, dans lequel lesdites particules sont composées d'une céramique.

4. Adhésif caoutchouc à métal selon l'une quelconque des revendications 1 à 3, dans lequel lesdites particules sphéroïdales sont composées de sphères creuses.

5. Adhésif caoutchouc à métal selon l'une quelconque des revendications 1 à 4, dans lequel lesdites particules sphéroïdales sont composées d'une céramique de silice alumine.

6. Adhésif caoutchouc à métal selon l'une quelconque des revendications 1 à 4, dans lequel lesdites particules sphéroïdales sont composées d'oxyde d'aluminium.

7. Adhésif caoutchouc à métal selon l'une quelconque des revendications 1 à 4, dans lequel lesdites particules sphéroïdales sont composées de dioxyde de silicium.

8. Adhésif caoutchouc à métal selon l'une quelconque des revendications 1 à 4, dans lequel lesdites particules sphéroïdales sont des microsphères de céramique.

9. Adhésif caoutchouc à métal selon l'une quelconque des revendications précédentes, dans lequel lesdites particules sphéroïdales ont une masse volumique se situant dans la plage d'environ 2 à 2,6 gm/cm³.

10. Adhésif caoutchouc à métal selon l'une quelconque des revendications précédentes, se présentant sous la forme d'une composition adhésive ayant un broyat de pigment de 0 à 0,05 mm (0-2 mils) mesuré par la jauge Hegman^{®}, ledit adhésif étant apte à être pulvérisé à une concentration totale en matières solides de 25 ± 2 % en poids, ayant une viscosité de 50 à 500 cP (Brookfield LVT 2 à 30 tpm) et comprenant un composé nitroso, une polyoléfine halogénée filmogène, un accepteur d'acide et de 5 % à 35 % en poids sec desdites particules sphéroïdales.

11. Adhésif caoutchouc à métal selon la revendication 10, dans lequel ledit composé nitroso est présent à raison de 15 à 25 % en poids sec.

12. Adhésif caoutchouc à métal selon la revendication 10 ou la revendication 11, dans lequel ladite polyoléfine halogénée filmogène est présente à raison de 0,1 à 15 % en poids sec.

13. Adhésif caoutchouc à métal selon la revendication 11, dans lequel ledit composé nitroso est présent à raison de 17 à 23 % en poids sec.

14. Adhésif caoutchouc à métal selon l'une quelconque des revendications 10 à 13, dans lequel ladite polyoléfine halogénée filmogène est un mélange dans un rapport en poids de 40-60 à 60-40 de polyéthylène chlorosulfoné au caoutchouc chloré.

15. Adhésif caoutchouc à métal selon l'une quelconque des revendications 10 à 13, dans lequel ladite polyoléfine halogénée filmogène comprend un mélange dans un rapport en poids de 60-70 à 40-30 de polyéthylène chlorosulfoné et de caoutchouc naturel chloré.

16. Adhésif caoutchouc à métal selon l'une quelconque des revendications 10 à 15, dans lequel ledit accepteur d'acide est présent à raison de 10 à 30 % en poids sec.

17. Adhésif caoutchouc à métal selon la revendication 16, dans lequel l'accepteur d'acide est présent à raison de 10 à 15 % en poids sec.

18. Adhésif caoutchouc à métal selon l'une quelconque des revendications 10 à 17, dans lequel ladite polyoléfine halogénée filmogène est choisie dans le groupe constitué par le caoutchouc naturel chloré, le polychloroprène chloré, le polybutadiène chloré, le poly(butadiène styrène) chloré, le poly(éthylène propylène) chloré, le poly(éthylène propylène diène non conjugué) chloré, le polyéthylène chloré, le polyéthylène chlorosulfoné, le poly(α-chloroacrylonitrile 2,3-dichloro-1,3-butadiène), le poly(2,3-dichloro-1,3-butadiène) bromé et leurs mélanges.

19. Adhésif caoutchouc à métal selon l'une quelconque des revendications 10 à 18, comprenant en outre une charge inerte ayant une surface spécifique BET supérieure à 10 m²/g substituée à raison de jusqu'à 10 % en poids desdites particules sphéroïdales, incompressibles, inertes.

20. Adhésif caoutchouc à métal selon l'une quelconque des revendications 10 à 19, dans lequel ledit composé nitroso est choisi dans le groupe constitué par le m-dinitrosobenzène, le p-dinitrosobenzène, le m-dinitrosonaphtalène, le p-dinitrosonaphtalène, le 2,5-dinitroso-p-cymène, le 2-méthyl-1,4-dinitrosobenzène, le 2-méthyl-5-chloro-1,4-dinitrosobenzène, le 2-fluoro-1,4-dinitrosobenzène, le 2-méthoxy-1,3-dinitrosobenzène, le 5-chloro-1,3-dinitrosobenzène, le 2-benzyl-1,4-dinitrosobenzène, le 2-cyclohexyl-1,4-dinitrosobenzène et leurs combinaisons.

21. Adhésif caoutchouc à métal selon l'une quelconque des revendications 10 à 20, comprenant en outre de 5 à 15 % en poids d'un co-agent de durcissement capable de former des réticulations covalentes entre ledit adhésif et un élastomère.

22. Procédé de fabrication d'un adhésif caoutchouc à métal, ledit procédé comprenant :
- se procurer un fluide adhésif élastomère à métal ;
- se procurer des particules sphéroïdales, incompressibles, inertes, ayant une surface spécifique BET de 0,1 à 10 m²/g et un diamètre de particule au 50^{ême} percentile (D50) de 5 à 25 µm,
- ajouter au moins un pour cent en poids desdites particules sphéroïdales audit fluide adhésif élastomère à métal pour fournir un adhésif élastomère à métal ayant une viscosité inférieure ou égale à 500 mPa.s (Brookfield LVT 2 à 30 tpm).

23. Procédé selon la revendication 22, dans lequel lesdites particules sphéroïdales ont une surface spécifique inférieure à 20m²/cm³.

24. Procédé selon la revendication 22 ou la revendication 23, dans lequel lesdites particules sphéroïdales sont composées d'une céramique.

25. Procédé selon l'une quelconque des revendications 22 à 24, dans lequel lesdites particules sphéroïdales sont composées d'une céramique de silice alumine.

26. Procédé selon l'une quelconque des revendications 22 à 24, dans lequel lesdites particules sphéroïdales sont composées d'oxyde d'aluminium.

27. Procédé selon l'une quelconque des revendications 22 à 24, dans lequel lesdites particules sphéroïdales sont composées de dioxyde de silicium.

28. Procédé selon l'une quelconque des revendications 22 à 24, dans lequel lesdites particules sphéroïdales sont des microsphères de céramique.

29. Procédé selon l'une quelconque des revendications 22 à 28, dans lequel des particules sphéroïdales sont ajoutées pour fournir une viscosité permettant la pulvérisation supérieure à 50 mPa.s (Brookfield LVT 2 à 30 tpm).

30. Procédé selon l'une quelconque des revendications 22 à 29, dans lequel le fluide adhésif élastomère à métal comprend un composé nitroso, une polyoléfine halogénée filmogène et un accepteur d'acide, et les particules sphéroïdales sont ajoutées à raison de 5 % à 35 % en poids sec pour produire un adhésif ayant un broyat de pigment de 0 à 0,05 mm (0-2 mils) mesuré par la jauge Hegman^{®}, ledit adhésif étant apte à être pulvérisé à une concentration totale en matières solides de 25 ± 2 % en poids et ayant une viscosité de 50 à 500 mPa.s (Brookfield LVT 2 à 30 tpm).

31. Procédé de liaison d'un élastomère à une surface métallique, ledit procédé comportant : se procurer une surface métallique, se procurer un adhésif caoutchouc à métal comprenant un composé nitroso, une polyoléfine halogénée filmogène et un accepteur d'acide et de 5 % à 35 % en poids sec de particules sphéroïdales, incompressibles, inertes, ayant une surface spécifique BET de 0,1 à 10 m²/g et un diamètre de particule au 50^{ème} percentile (D50) de 5 à 25 µm, ledit adhésif caoutchouc à métal ayant une viscosité de 50 à 500 mPa.s (Brookfield LVT 2 à 30 tpm), et pulvériser ledit adhésif caoutchouc à métal fourni sur ladite surface métallique.

32. Procédé selon la revendication 31, ledit procédé comprenant la pulvérisation dudit adhésif caoutchouc à métal fourni sur ladite surface métallique dans une quantité pour fournir une épaisseur de film sec de 0,007 à 0,0508 mm (0,0003 à 0,002 pouce) ±0,0025 à 0,0076 mm (0,0001 à 0,0003 pouce) en une ou deux couches pulvérisées.
